# EUROPÄISCHE PATENTSCHRIFT

(11) **EP 3 361 135 B1**
(45) Veröffentlichungstag und Bekanntmachung des Hinweises auf die Patenterteilung: **07.04.2021**
(21) Anmeldenummer: 18156756.1
(22) Anmeldetag: 14.02.2018
(51) Int. Cl.: F16L 37/084, F16L 37/088

(54) **SCHNELLVERBINDUNGSVORRICHTUNG UND SCHNELLVERBINDUNGSSYSTEM**
QUICK CONNECTING DEVICE AND QUICK CONNECTING SYSTEM
DISPOSITIF DE CONNEXION RAPIDE ET SYSTÈME DE CONNEXION RAPIDE

(30) Priorität: 14.02.2017 DE 102017001396
(43) Veröffentlichungstag der Anmeldung: 15.08.2018
(73) Patentinhaber: UNIWELL Rohrsysteme GmbH & Co. KG, 96106 Ebern (DE)
(72) Erfinder: Hanzelmann, Michael, 58507 Lüdenscheid (DE)
(74) Vertreter: Von Rohr Patentanwälte Partnerschaft mbB

(56) Entgegenhaltungen:
- DE-C1- 19 708 377
- DE-U1-202017 101 429
- JP-A- 2013 204 793
- US-A1- 2010 276 924

## Beschreibung

Die vorliegende Erfindung betrifft eine Schnellverbindungsvorrichtung gemäß dem Oberbegriff des Anspruchs 1 und ein Schnellverbindungssystem.

Die vorliegende Erfindung betrifft eine Schnellverbindungsvorrichtung zur Erzeugung einer ununterbrochenen fluidischen Verbindung mit einer Fluidleitung durch Anschluss an ein offenes, eine Hinterschneidung aufweisendes Fluidleitungsendstück der Fluidleitung.

Eine Schnellverbindungsvorrichtung im Sinne der vorliegenden Erfindung ist eine konstruktive Einrichtung, die zur bevorzugt werkzeuglosen Herstellung der Verbindung ausgebildet ist. Vorzugsweise ist die Schnellverbindungseinrichtung dazu ausgebildet, ein Fluidleitungsendstück zu halten, zu sichern und/oder, insbesondere fluiddicht, anzuschließen. Insbesondere handelt es sich um eine (Schlauch-) Kupplung eines Stecksystems zur Herstellung eines fluidischen und/oder mechanischen Anschlusses durch Aufstecken auf das Fluidleitungsendstück.

Die Schnellverbindungsvorrichtung ist bevorzugt zur Erzeugung einer ununterbrochenen fluidischen Verbindung mit einer Fluidleitung durch Anschluss an das offene, eine Hinterschneidung aufweisendes Fluidleitungsendstück der Fluidleitung ausgebildet. Hierbei kann die Schnellverbindungsvorrichtung mechanisch mittels der Hinterschneidung an dem Fluidleitungsendstück gehalten und/oder - beispielsweise durch eine oder mehrere Dichtungen - gegenüber dem Fluidleitungsendstück abgedichtet sein.

Die Schnellverbindungsvorrichtung ist dazu ausgebildet, auf einfache und schnelle Weise eine fluidische und/oder mechanische Verbindung herzustellen. Insbesondere handelt es sich um einen Teil eines Stecksystems bzw. die Schnellverbindungsvorrichtung bildet mit dem Fluidleitungsendstück ein Stecksystem. Bei einem Stecksystem können die Teile, hier die Schnellverbindungsvorrichtung und das Fluidleitungsendstück durch Stecken, also bevorzugt lediglich lineare bzw. axiale Bewegung, miteinander verbunden werden.

"Verbinden" bedeutet im Sinne der vorliegenden Erfindung vorzugweise die Herstellung eines zur Umgebung hin abgedichteten, fluidischen Durchgangs und/oder einer mechanischen Verbindung zum Halten der Schnellverbindungsvorrichtung an dem Fluidleitungsendstück (oder umgekehrt).

Bei der "Verbindung" im Sinne der vorliegenden Erfindung handelt es sich vorzugsweise um diejenige zwischen einem Fluidleitungsendstück (offenes Rohrende) und einer anderen Fluidleitung (z.B. Schlauch). Somit ist die Schnellverbindungsvorrichtung vorzugsweise ein Adapter zur fluidischen und/oder mechanischen Verbindung gleicher oder unterschiedlicher Fluidleitungen.

Durch die Schnellverbindungsvorrichtung ist die Verbindung vorzugsweise ohne Verdrehen und/oder ohne die Notwendigkeit weiterer Teile, Hilfsmittel oder Werkzeuge herstellbar. Es ist also vorzugsweise eine Einrichtung zur hilfsmittel- und werkzeugfreien Herstellung der fluidischen und/oder mechanischen Verbindung.

Die US 5,052,725 zeigt eine gattungsgemäße Schnellverbindungsvorrichtung. Zum Anschluss eines Fluidleitungsendstücks an die Schnellverbindungsvorrichtung kann ein Sicherungselement heruntergedrückt werden, wodurch das Fluidleitungsendstück in eine dazu vorgesehene Aufnahme des Sicherungselementes geschoben werden kann. Nach hinreichend weitem Einschieben des Fluidleitungsendstücks kann das Sicherungselement losgelassen werden, so dass es sich aufgrund einer Vorspannung wieder in seine Ausgangsposition zurückbewegt. Dabei greift das Sicherungselement in eine Nut des Fluidleitungsendstücks ein, sodass das Fluidleitungsendstück gegen Trennen von der Schnellverbindungsvorrichtung gesichert ist.

Die US 2010/0276924 A1 betrifft eine Schnappkupplung zwischen einer Fluidleitung und einem Endstück eines festen Rohrteils. Die Vorrichtung weist einen visuellen Indikator zur Anzeige einer korrekten Verbindung auf.

Die DE 20 2017 101 429 U1 betrifft eine Steckverbindung für Rohrleitungen mit einem Steckteil und einem Aufnahmeteil zur Aufnahme des Steckteils, wobei am Aufnahmeteil eine am Außenumfang optisch erkennbare Anzeigeeinrichtung vorgesehen ist, die den eingerasteten Eingriff des Steckteils anzeigt.

Die DE 197 08 377 C1 betrifft eine lösbare Steckverbindung zum Verbinden von Rohrleitungen mit einem rohrförmigen Einsteckteil und einem Steckgehäuse zur Aufnahme des Einsteckteils. Das Steckgehäuse weist ein Anzeigeteil zum Anzeigen einer korrekten Montage auf. Das Anzeigeteil besteht aus V-förmig zusammengeführten, federnd zusammendrückbaren Stegen.

Es hat sich gezeigt, dass die Möglichkeit einer einhändigen Montage auch an engen Stellen vorteilhaft für einen zuverlässigen Einsatz ist. In diesem Zusammenhang ist die Notwendigkeit, ein Sicherungselement zur Herstellung einer Verbindung zu betätigen, nachteilig. Weiter ist es bei vorbekannten Lösungen möglich, dass die Verbindung durch versehentliche Betätigung des Sicherungselements, beispielsweise durch Berührung mit anderen Bauteilen, unbeabsichtigt gelöst wird, was zu Wasserschäden führen kann. Entsprechendes ist der Fall, wenn die fluidische Verbindung versehentlich nicht vollständig hergestellt ist und diese sich möglicherweise nach einer unbestimmten Zeit selbsttätig löst.

Der vorliegenden Erfindung liegt die Aufgabe zugrunde, eine Schnellverbindungsvorrichtung und ein Schnellverbindungssystem mit einer Schnellverbindungsvorrichtung anzugeben, wobei eine Verwendbarkeit, Zuverlässigkeit und/oder Anwendungssicherheit verbessert werden kann/können.

Die obige Aufgabe wird durch eine Schnellverbindungsvorrichtung gemäß Anspruch 1 oder durch ein Schnellverbindungssystem gemäß Anspruch 14 gelöst. Vorteilhafte Weiterbildungen sind Gegenstand der Unteransprüche.

Die vorliegende Erfindung betrifft eine Schnellverbindungsvorrichtung zur Erzeugung einer ununterbrochenen fluidischen Verbindung mit einer Fluidleitung durch Anschluss an ein offenes, eine Hinterschneidung aufweisendes Fluidleitungsendstück der Fluidleitung.

Die vorschlagsgemäße Schnellverbindungsvorrichtung dient bevorzugt als Adapter, also zum Verbinden zweier, vorzugsweise unterschiedlicher, Fluidleitungen, z. B. zum Verbinden von unterschiedlichen Rohren, eines Rohrendstücks mit einem Schlauch und/oder von Schläuchen miteinander. Grundsätzlich kann die Schnellverbindungsvorrichtung jedoch auch Teil einer Fluidleitung sein oder dazu ausgebildet sein, das Fluidleitungsendstück gegen Austreten von Fluid abzuschließen. Die Schnellverbindungsvorrichtung kann also die Funktion eines Blindstopfens haben oder einen Blindstopfen bilden. Auch in diesem Fall wird vorzugsweise eine fluidische Verbindung hergestellt, die jedoch in der Schnellverbindungsvorrichtung endet. Alternativ oder zusätzlich kann die Schnellverbindungsvorrichtung auch eine oder einen Teil einer Armatur bilden.

Die Schnellverbindungsvorrichtung ist an dem Fluidleitungsendstück durch Bewegung entlang einer Einschubrichtung anschließbar. Als "Einschubrichtung" wird die Richtung einer Relativbewegung der Schnellverbindungsvorrichtung zum Fluidleitungsendstück bezeichnet, durch die die fluidische Verbindung herstellbar ist und/oder durch die ein Halten bzw. Sichern des Fluidleitungsendstücks an der Schnellverbindungsvorrichtung bewirkt werden kann. Eine Relativbewegung des Anschlusses des Fluidleitungsendstücks an die Schnellverbindungsvorrichtung bewirkt also die Verbindung. Hierbei kann das Fluidleitungsendstück in die Schnellverbindungsvorrichtung eingeschoben werden oder die Schnellverbindungsvorrichtung kann in das Fluidleitungsendstück eingeschoben werden oder die Schnellverbindungsvorrichtung kann eine Wandung des Fluidleitungsendstücks umfassen. Der Begriff "Einschubrichtung" ist im Sinne der vorliegenden Erfindung daher grundsätzlich breit zu verstehen, wobei "Einschieben" insbesondere bedeutet, dass das Fluidleitungsendstück in die Einschubrichtung in die Schnellverbindungsvorrichtung geschoben wird.

Die Schnellverbindungsvorrichtung weist ein Gehäuse und ein Sicherungselement auf. Das Sicherungselement weist einen Sicherungsabschnitt oder mehrere Sicherungsabschnitte zum Sichern eines Fluidleitungsendstücks gegen Entfernen von der Schnellverbindungsvorrichtung durch Hintergreifen einer Hinterschneidung des Fluidleitungsendstücks, sowie einen Betätigungsabschnitt und/oder ein Betätigungselement zur manuellen Bewegung des Sicherheitselements auf.

Ferner weist die Schnellverbindungsvorrichtung eine Halteeinrichtung auf, die zum Sichern des Fluidleitungsendstücks an der Schnellverbindungsvorrichtung ausgebildet ist.

Die Halteeinrichtung weist ein Sicherungselement auf, dass dazu ausgebildet ist, bei Bewegung von der Entsicherungsposition in die Sicherungsposition die Hinterschneidung des Fluidleitungsendstücks zu hintergreifen. Auf diese Weise wird ein Trennen der ununterbrochenen fluidischen Verbindung oder ein Separieren der Schnellverbindungsvorrichtung und des Fluidleitungsendstücks voneinander blockiert.

Das Sicherungselement ist zwischen einer Sicherungsposition und einer Entsicherungsposition bewegbar.

Die Sicherungselement weist vorzugsweise zwei Sicherungsabschnitte auf. Die Schnellverbindungseinrichtung ist dazu ausgebildet, dass das Sicherungselement im jeweiligen Sicherungsabschnitt eine Hinterschneidung des Fluidleitungsendstücks in der gemeinsamen, quer zur Einschubrichtung verlaufenden Verriegelungsebene hintergreifen kann.

Die Sicherungsabschnitte liegen in ihrer Sicherungsposition unmittelbar an der Hinterschneidung des Fluidleitungsendstücks an, bevorzugt mit einer Fläche, Oberfläche, Kante o. dgl.

Durch das Hintergreifen wird eine formschlüssige Sicherung des Fluidleitungsendstücks an oder in der Schnellverbindungsvorrichtung realisiert. Auf diese Weise können Beschädigungen des Fluidleitungsendstücks verhindert werden, die bei einem kraft- oder reibschlüssigen Halten des Fluidleitungsendstücks entstehen können, z. B. durch die Verwendung von Haltekrallen.

Des Weiteren ist zum formschlüssigen Sichern des Fluidleitungsendstücks durch Hintergreifen einer Hinterschneidung des Fluidleitungsendstücks mit einem Sicherungselement kein Werkzeug nötig, was z. B. bei Lösungen der Fall ist, die auf einer reib- oder kraftschlüssigen Verbindung basieren und/oder in denen verschiedene Teile, beispielsweise mit Presszangen, aneinander gepresst werden.

Die Bewegbarkeit des Sicherungselements ermöglicht eine einfache Bedienung der Schnellverbindungsvorrichtung. Insbesondere muss weder beim Sichern des Fluidleitungsendstücks noch beim Entsichern des Fluidleitungsendstücks ein Werkzeug verwendet werden, sondern das Sicherungselement ist manuell betätigbar und/oder bewegbar, z. B. durch Herunterdrücken mit einem Finger.

Vorzugsweise ist durch Anordnung des Sicherungselements in seiner Sicherungsposition ein Separieren der Schnellverbindungsvorrichtung und des Fluidleitungsendstücks voneinander blockiert oder verhindert.

Die Schnellverbindungsvorrichtung und das Fluidleitungsendstück sind vorzugsweise voneinander trennbar/separierbar. Hierbei erfordert das Separieren bevorzugt, dass das Sicherungselement in seiner Entsicherungsposition angeordnet ist. Hierdurch wird ein unbeabsichtigtes Lösen der Verbindung vermieden.

Die Sicherung des Fluidleitungsendstücks in der Schnellverbindungsvorrichtung bzw. das fluiddichte Anschließen des Fluidleitungsendstücks an die Schnellverbindungsvorrichtung erfolgt vorzugsweise durch Einstecken und/oder Einschieben des Fluidleitungsendstücks in die Schnellverbindungsvorrichtung.

Vorzugsweise weist die Schnellverbindungsvorrichtung genau ein, vorzugsweise einstückig ausgebildetes, Sicherungselement auf. Dies ermöglicht eine einfache und kostengünstige Herstellung der Schnellverbindungsvorrichtung.

Vorzugsweise sind die Schnellverbindungsvorrichtung und/oder das Sicherungselement dazu ausgebildet, dass bei Bewegung des Sicherungselements von der Sicherungsposition in die Entsicherungsposition und/oder bei Einschieben des Fluidleitungsendstücks in die Schnellverbindungsvorrichtung zwei Sicherungsabschnitte des Sicherungselements auseinander bewegt, insbesondere gespreizt, werden. Die Sicherungsabschnitte sind vorzugsweise einstückig mit dem Sicherungselement ausgebildet. Bevorzugt werden die Sicherungsabschnitte bei Bewegung des Sicherungselements quer zu der Bewegungsrichtung des Sicherungselements bewegt, insbesondere verbogen.

Alternativ oder zusätzlich weist das Sicherungselement zwei einander gegenüberliegende, vorzugsweise einstückig mit dem Sicherungselement ausgebildete, Sicherungsabschnitte auf.

Erfindungsgemäß weist die Schnellverbindungsvorrichtung einen mittels des Fluidleitungsendstücks, vorzugsweise automatisch und/oder selbsttätig, bewegbaren oder betätigbaren Sicherungsindikator auf. Der Sicherungsindikator ist zum optischen Signalisieren einer erfolgten Sicherung des Fluidleitungsendstücks gegen Entnahme aus der Schnellverbindungsvorrichtung 2 ausgebildet. Der Sicherungsindikator ermöglicht eine optische Kontrolle der Sicherung durch den Benutzer und ist somit einer einfachen und sicheren Bedienung der Schnellverbindungsvorrichtung zuträglich.

Vorzugsweise weist mindestens einer der Sicherungsabschnitte des Sicherungselements oder weisen beide Sicherungsabschnitte des Sicherungselements eine Auflaufschräge auf. Insbesondere ist die Auflaufschräge dazu ausgebildet oder derart angeordnet, dass die Hinterschneidung des Fluidleitungsendstücks beim Einschieben desselben in die Schnellverbindungsvorrichtung in Kontakt mit der Auflaufschräge bzw. mit den Auflaufschrägen gelangt.

Besonders bevorzugt gleitet das Fluidleitungsendstück bzw. die Hinterschneidung beim Einschieben des Fluidleitungsendstücks an der Auflaufschräge bzw. den Auflaufschrägen entlang und bewegt den Sicherungsabschnitt oder die Sicherungsabschnitte dabei derart, dass der Abstand zwischen den Sicherungsabschnitten vergrößert wird und das Fluidleitungsendstück so weit in die Schnellverbindungsvorrichtung einschiebbar ist, dass es darin gesichert wird. Auf diese Weise ist ein einfaches Sichern des Fluidleitungsendstücks in der Schnellverbindungsvorrichtung ermöglicht.

Die Auflaufschrägen bilden vorzugsweise konische Flächen bzw. Flächen, die in ihrer Form einem Bereich oder Abschnitt der Mantelfläche eines Kegels entsprechen. Besonders bevorzugt bilden die Auflaufschrägen der einander gegenüberliegenden Sicherungsabschnitte Abschnitte einer Mantelfläche eines gedachten, sich in Einschubrichtung verjüngenden Kegels. Auf diese Weise ist die zum Einschieben des Fluidleitungsendstücks bzw. zum Bewegen der Sicherungsabschnitte benötigte Kraft verringert oder minimiert.

Vorzugsweise sind die Sicherungsabschnitte des Sicherungselements durch einen Betätigungsabschnitt des Sicherungselements miteinander verbunden. Der Betätigungsabschnitt des Sicherungselements ist insbesondere quer zu den und/oder zwischen den Sicherungsabschnitten angeordnet. Alternativ oder zusätzlich bilden die Sicherungsabschnitte und der Betätigungsabschnitt zumindest im Wesentlichen die Form eines Us bzw. eine U-artige Form. Mit anderen Worten bildet das Sicherungselement vorzugsweise keine ringartige bzw. geschlossene Struktur, sondern eine halboffene oder einseitig offene Struktur.

Die Innenseiten der Sicherungsabschnitte verlaufen vorzugsweise, zumindest in einem ersten Bereich, schräg zu der Bewegungsrichtung und/oder laufen aufeinander zu. Bevorzugt ist zwischen den Sicherungsabschnitten auf diese Weise ein sich verengender Öffnungsbereich gebildet. Mit anderen Worten verringert sich vorzugsweise, zumindest in dem ersten Bereich, der Abstand der Innenseiten mit zunehmendem Abstand von dem Betätigungsabschnitt. Auf diese Weise kann erreicht werden, dass das Fluidleitungsendstück beim Einschieben in die Schnellverbindungsvorrichtung mit den Sicherungsabschnitten, insbesondere den Auflaufschrägen, in Kontakt tritt und dennoch eine zum Durchschieben des Fluidleitungsendstücks ausreichend breite Öffnung bzw. ein ausreichend breiter Öffnungsbereich gebildet werden kann.

Bevorzugt weisen die Sicherungsabschnitte Gleitflächen auf, die dazu ausgebildet sind, bei Bewegung des Sicherungselements in Richtung der Entsicherungsposition ein Auseinanderbewegen oder Spreizen der Sicherungsabschnitte zu bewirken. Die Gleitflächen sind besonders bevorzugt in einem zweiten Bereich und/oder an einem freien Ende der Sicherungsabschnitte angeordnet.

Die Innenflächen des ersten Bereichs und die Gleitflächen des zweiten Bereichs schließen vorzugsweise einen stumpfen Winkel ein oder bilden diesen oder sind in einem stumpfen Winkel zueinander angeordnet.

Bei der Schnellverbindungsvorrichtung ist es bevorzugt, dass die freien Enden der Sicherungsabschnitte jeweils in einer zugeordneten Aufnahme des Gehäuses der Schnellverbindungsvorrichtung angeordnet sind. Bevorzugt liegen die Gleitflächen jeweils auf einer Gegenfläche der (zugeordneten) Aufnahme an, insbesondere so dass bei Bewegung des Sicherungselements in Betätigungsrichtung die Sicherungsabschnitte nach außen bewegt, gespreizt oder verbogen werden.

Vorzugsweise weist das Sicherungselement eine oder mehrere Rückstelleinrichtungen zur, insbesondere automatischen oder selbsttätigen, Bewegung des Sicherungselements in die Sicherungsposition auf. Dies unterstützt ein zuverlässiges und/oder automatisches Sichern des Fluidleitungsendstücks.

Es ist bevorzugt, dass das Sicherungselement und/oder der Sicherungsabschnitt an einer Außenseite eine Aussparung aufweisen, insbesondere so dass eine Bewegung der Sicherungsabschnitte nach außen ermöglicht ist.

Vorzugsweise weisen die Sicherungsabschnitte auf einer Außenseite eine Schulter auf oder bilden diese, bevorzugt so dass das Sicherungselement gegen ein Herausfallen oder Entfernen aus einem Gehäuse der Schnellverbindungsvorrichtung gesichert ist.

Der Sicherungsindikator weist ein Signalelement zur Anzeige der Sicherung des Fluidleitungsendstücks auf. Das Signalelement ist vorzugsweise zur Anzeige der Sicherung zumindest teilweise aus dem Gehäuse der Schnellverbindungsvorrichtung herausbewegbar.

Besonders bevorzugt weist der Sicherungsindikator zwei, insbesondere gleichartig oder identisch ausgebildete, Signalelemente auf bzw. ist der Sicherungsindikator zweiteilig ausgebildet. Der Sicherungsindikator bzw. das Signalelement ermöglicht eine optische Kontrolle bzw. Signalisierung einer korrekten bzw. erfolgten Sicherung des Fluidleitungsendstücks in der Schnellverbindungsvorrichtung.

Es ist erfindungsgemäß, dass das Signalelement dazu ausgebildet und/oder derart in dem Gehäuse angeordnet ist, dass die Anzeige der Sicherung durch eine Drehung des Signalelements, insbesondere um eine asymmetrisch zu dem Signalelement verlaufende oder angeordnete Drehachse, erfolgt. Die Anzeige der Sicherung erfolgt bevorzugt automatisch und/oder bei Einschieben des Fluidleitungsendstücks in die Schnellverbindungsvorrichtung.

Das Signalelement weist ein, insbesondere einstückig mit dem Signalelement ausgebildetes, Federelement auf. Das Federelement ist dazu ausgebildet, bei Entnahme des Fluidleitungsendstücks aus der Schnellverbindungsvorrichtung 2 eine, vorzugsweise automatische bzw. selbsttätige, Bewegung des Signalelements in das Gehäuse 4 zu bewirken.

Die Schnellverbindungsvorrichtung ist vorzugsweise dazu ausgebildet, mit den Sicherungsabschnitten die Hinterschneidung auf quer zur Einschubrichtung gegenüberliegenden Seiten des Fluidleitungsendstücks zu hintergreifen. Dies ermöglicht eine gleichmäßige Kraftverteilung und -ableitung.

Das Sicherungselement ist vorzugsweise automatisch oder selbsttätig, insbesondere ohne manuelle Betätigung des Sicherungselements, aus der Entsicherungsposition in die Sicherungsposition bewegbar, was einer vereinfachten Bedienung bzw. einem vereinfachten Sichern und/oder Entsichern des Fluidleitungsendstücks zuträglich ist.

Gemäß einer weiteren Ausführungsform weist die Schnellverbindungsvorrichtung zwei Sicherungselemente auf.

Vorzugsweise gelten die voranstehend und nachfolgend erläuterten Aspekte, Merkmale und Eigenschaften für beide Ausführungsformen, sofern dies nicht offensichtlich widersprüchlich oder inkompatibel ist.

Die Sicherungselemente weisen vorzugsweise einen Sicherungsabschnitt zum Sichern eines Fluidleitungsendstücks gegen Entfernen von der Schnellverbindungsvorrichtung durch Hintergreifen einer Hinterschneidung des Fluidleitungsendstücks, einen Führungsabschnitt zur Führung der Sicherungselemente aneinander und einen Betätigungsabschnitt und/oder ein Betätigungselement zur manuellen Bewegung der Sicherheitselemente auf.

Ferner weist die Schnellverbindungsvorrichtung eine Halteeinrichtung auf, die zum Sichern der Schnellverbindungsvorrichtung an dem Fluidleitungsendstück ausgebildet ist.

Die Halteeinrichtung weist vorzugsweise zwei Sicherungselemente auf. Die Sicherungselemente sind unabhängig voneinander jeweils zwischen einer Sicherungsposition und einer Entsicherungsposition in einer gemeinsamen, quer zu der Einschubrichtung verlaufenden Verriegelungsebene bewegbar.

Die Sicherungselemente sind jeweils dazu ausgebildet, bei Bewegung von der Entsicherungsposition in die Sicherungsposition die Hinterschneidung des Fluidleitungsendstücks zu hintergreifen. Auf diese Weise wird ein Trennen der ununterbrochenen fluidischen Verbindung oder ein Separieren der Schnellverbindungsvorrichtung und des Fluidleitungsendstücks voneinander blockiert.

Vorzugsweise ist jedes Sicherungselement zwischen einer Sicherungsposition und einer Entsicherungsposition bewegbar. Durch die separate Bewegbarkeit der Sicherungselemente wird ein sicheres bzw. zuverlässiges Halten des Fluidleitungsendstücks in der Schnellverbindungsvorrichtung ermöglicht. Beim oder durch Bewegen eines der Sicherungselemente wird das andere Sicherungselement vorzugsweise nicht bewegt, so dass ein unbeabsichtigtes Lösen der Sicherung, z. B. durch versehentliches Betätigen oder Bewegen eines der Sicherungselemente, vermieden wird.

Die separat bewegbaren Sicherungselemente weisen jeweils einen Sicherungsabschnitt auf. Vorzugsweise ist die Schnellverbindungseinrichtung dazu ausgebildet, dass die Sicherungselemente im jeweiligen Sicherungsabschnitt eine Hinterschneidung des Fluidleitungsendstücks in der gemeinsamen, quer zur Einschubrichtung verlaufenden Verriegelungsebene hintergreifen können.

Die Sicherungsabschnitte liegen in ihrer Sicherungsposition unmittelbar an der Hinterschneidung des Fluidleitungsendstücks an, bevorzugt mit einer Fläche, Oberfläche, Kante o. dgl.

Die Sicherungselemente, insbesondere deren Kanten oder Flächen zur Anlage an der Hinterschneidung in Gebrauchslage, sind also vorzugsweise innerhalb oder entlang derselben Verriegelungsebene zwischen der Sicherungsposition und einer Entsicherungsposition bewegbar.

Durch das Hintergreifen wird eine formschlüssige Sicherung des Fluidleitungsendstücks an oder in der Schnellverbindungsvorrichtung realisiert. Auf diese Weise können Beschädigungen des Fluidleitungsendstücks verhindert werden, die bei einem kraft- oder reibschlüssigen Halten des Fluidleitungsendstücks entstehen können, z. B. durch die Verwendung von Haltekrallen.

Des Weiteren ist zum formschlüssigen Sichern des Fluidleitungsendstücks durch Hintergreifen einer Hinterschneidung des Fluidleitungsendstücks mit Sicherungselementen kein Werkzeug nötig, was z. B. bei Lösungen der Fall ist, die auf einer reib- oder kraftschlüssigen Verbindung basieren und/oder in denen verschiedene Teile, beispielsweise mit Presszangen, aneinander gepresst werden.

Die gemeinsame Verriegelungsebene der beiden Sicherungselemente ermöglicht ein zuverlässiges Halten bzw. Sichern des Fluidleitungsendstücks. Insbesondere wird eine die Schnellverbindungsvorrichtung und das Fluidleitungsendstück auseinandertreibende Kraft (Wasserdruck, äußere Zugkraft) gleichmäßig auf die Sicherungselemente verteilt. Weiter werden unerwünschte Bewegungen des Fluidleitungsendstücks relativ zu der Schnellverbindungsvorrichtung minimiert bzw. verringert. Insbesondere werden mögliche Torsionskräfte vermieden, die bei Befestigung an zueinander axial versetzten Abschnitten des Fluidleitungsendstücks auftreten könnten. Somit wird die Materialermüdung verringert.

Die Bewegbarkeit der Sicherungselemente ermöglicht eine einfache Bedienung der Schnellverbindungsvorrichtung. Insbesondere muss weder beim Sichern des Fluidleitungsendstücks noch beim Entsichern des Fluidleitungsendstücks ein Werkzeug verwendet werden, sondern die Sicherungselemente sind manuell betätigbar und/oder bewegbar, z. B. durch Herunterdrücken mit einem Finger.

Vorzugsweise ist durch Anordnung lediglich eines der Sicherungselemente in seiner Sicherungsposition ein Separieren der Schnellverbindungsvorrichtung und des Fluidleitungsendstücks voneinander blockiert oder verhindert.

Die Schnellverbindungsvorrichtung und das Fluidleitungsendstück sind voneinander trennbar/separierbar. Hierbei erfordert das Separieren bevorzugt, dass die zwei Sicherungselemente gleichzeitig in ihren Entsicherungspositionen angeordnet sind. Hierdurch wird ein unbeabsichtigtes Lösen der Verbindung vermieden.

Besonders bevorzugt ist eine Entnahme des Fluidleitungsendstücks bzw. das Lösen der Verbindung nicht möglich, wenn nur eines der zwei Sicherungselemente in seiner Sicherungsposition positioniert ist und/oder wenn eines der Sicherungselemente in seiner Sicherungsposition und das andere Sicherungselement in seiner Entsicherungsposition positioniert ist. Dies verhindert ein versehentliches bzw. ungewolltes Entsichern des Fluidleitungsendstücks, insbesondere durch versehentliches Bewegen bzw. Betätigen eines der Sicherungselemente.

Insbesondere muss ein Benutzer bzw. Bediener der Schnellverbindungsvorrichtung bzw. des Schnellverbindungssystems zur Entnahme des Fluidleitungsendstücks beide Sicherungselemente betätigen oder bewegen. Typischerweise und/oder am einfachsten geschieht dies durch Bedienen der Schnellverbindungsvorrichtung oder des Schnellverbindungssystems mit zwei Fingern, weswegen die vorschlagsgemäße Schnellverbindungsvorrichtung ein sogenanntes "Zwei-Finger-System" ist oder bildet.

Die Schnellverbindungsvorrichtung ist vorzugsweise dazu ausgebildet, mit den Sicherungsabschnitten der Sicherungselemente die Hinterschneidung auf quer zur Einschubrichtung gegenüberliegenden Seiten des Fluidleitungsendstücks zu hintergreifen. Dies ermöglicht eine gleichmäßige Kraftverteilung und -ableitung.

Vorzugsweise weist die Halteeinrichtung zum automatischen Bewegen der Sicherungselemente in ihre Sicherungsposition mindestens eine Rückstelleinrichtung auf, durch die die Sicherungselemente in ihre Sicherungsposition oder in Richtung ihrer Sicherungsposition vorgespannt sind.

Die Sicherungselemente sind vorzugsweise gleichzeitig in ihre Sicherungsposition bewegbar, wenn sich die Hinterschneidung in Einschubrichtung auf Höhe der Sicherungselemente oder hinter den Sicherungselementen befindet. Hierdurch kann eine sichere Verbindung durch beide, voneinander unabhängige Sicherungselemente gleichzeitig erfolgen.

Die Sicherungselemente weisen vorzugsweise Auflaufschrägen auf, wobei die Sicherungselemente durch Einwirkung des Fluidleitungsendstücks in Einschubrichtung auf die Auflaufschrägen automatisch oder selbsttätig in Richtung ihrer Entsicherungsposition bewegbar sind.

Die Auflaufschrägen sind vorzugsweise an den Sicherungsabschnitten und insbesondere auf einer in Einschubrichtung einer Fläche, die bei Hintergreifen der Hinterschneidung an dem Fluidleitungsendstück anliegt, abgewandten oder gegenüberliegenden Seite angeordnet. Hierdurch ist es möglich, ohne manuelle oder aktive Bewegung der Sicherungselemente durch einfaches Aufstecken der Schnellverbindungsvorrichtung auf das Fluidleitungsendstück die durchgehende Fluidverbindung herzustellen. Dies ist insbesondere bei Anwendung in verwinkelten Bereichen von Vorteil.

Die Sicherungselemente weisen vorzugsweise Führungsabschnitte zum Führen der Sicherungselemente aneinander auf. Die Führungsabschnitte sind vorzugsweise getrennt von den Sicherungsabschnitten und/oder grenzen an diese an.

Hierbei überragen die Sicherungsabschnitte die Führungsabschnitte bevorzugt entlang der Einschubrichtung. Alternativ oder zusätzlich greift ein Sicherungsabschnitt eines der Sicherungselemente in das andere der Sicherungselemente ein. Besonders bevorzugt greifen die Sicherungselemente wechselseitig ineinander ein. Hierdurch können die Sicherungselemente aneinander entlanggeführt werden und gleichzeitig Sicherungsabschnitte aufweisen, die in derselben Verriegelungsebene angeordnet und/oder bewegbar sind.

Vorzugsweise sind die Sicherungselemente dazu ausgebildet, beim Einschieben eines Fluidleitungsendstücks in die Schnellverbindungsvorrichtung durch das Fluidleitungsendstück quer zu der Einschubrichtung, insbesondere in eine von dem Fluidleitungsendstück weg weisende oder bezüglich des Fluidleitungsendstücks radiale Richtung, bewegt zu werden.

Hierdurch kann erreicht werden, dass die Sicherungselemente quer zur Einschubrichtung aneinander entlang gleiten oder geführt sind, wodurch die Sicherungsabschnitte in derselben Verriegelungsebene liegen und in derselben Verriegelungsebene bewegbar sind. Weiter fluchten die Sicherungsabschnitte bzw. deren Flächen, die bei Hintergreifen der Hinterschneidung(en) am Fluidleitungsendstück anliegen, vorzugsweise miteinander, insbesondere in der Verriegelungsebene.

Die Verriegelungsebene verläuft bevorzugt senkrecht zur Einschubrichtung bzw. zur Symmetrie- oder Längsachse des mit der Schnellverbindungsvorrichtung verbundenen oder verbindbaren Fluidleitungsendstücks. Diese Symmetrie- oder Längsachse entspricht oder verläuft vorzugsweise entlang der Einschubrichtung oder umgekehrt.

Die Verbindung bzw. der erfolgreiche Abschluss des Prozesses zur Herstellung der Verbindung wird bevorzugt durch ein optisches Signal und/oder durch ein akustisches Signal signalisiert.

Die Schnellverbindungsvorrichtung weist einen mittels des Fluidleitungsendstücks automatisch oder selbsttätig bewegbaren Sicherungsindikator zum optischen Signalisieren einer erfolgten Sicherung des Fluidleitungsendstücks gegen Trennen der Verbindung bzw. Entnahme auf. Dieser wird bei oder durch Einschieben des Rohrleitungsendstücks in die Schnellverbindungsvorrichtung bewegt, sodass er sichtbar oder verdeckt wird.

Vorzugsweise sind die Sicherungselemente dazu ausgebildet, bei Bewegung in die Sicherungsposition ein hörbares akustisches Signal zu erzeugen, um die erfolgte Sicherung des Fluidleitungsendstücks gegen Abnehmen von der Schnellverbindungsvorrichtung zu signalisieren.

Besonders bevorzugt wird sowohl die Herstellung einer durchgehenden fluidischen Verbindung optisch als auch die Herstellung einer mechanischen Verbindung, die die Schnellverbindungsvorrichtung an dem Fluidleitungsendstück hält, akustisch signalisiert.

Die optische und/oder akustische Signalisierung der Herstellung einer fluidischen Verbindung zwischen und/oder der Sicherung gegen Trennen des Fluidleitungsendstücks und der Schnellverbindungsvorrichtung hat insbesondere den Vorteil, dass auch bei Einsatz in verwinkelten Bereichen durch einen Anwender sicher identifiziert werden kann, dass die Verbindung ordnungsgemäß hergestellt ist, also eine durchgehende, zur Umgebung abgedichtete fluidische Verbindung bzw. Passage wie ein Kanal gebildet wurde bzw. ist und zudem das Fluidleitungsendstück an der Schnellverbindungsvorrichtung gegen Separieren gesichert wurde bzw. ist.

Dies ermöglicht ein einfaches und zuverlässiges Bedienen der Schnellverbindungsvorrichtung. Der Benutzer kann nämlich auf einfache Weise überprüfen, ob das Fluidleitungsendstück in der Schnellverbindungsvorrichtung gesichert ist. Ein fehlerhaftes Anschließen des Fluidleitungsendstücks bzw. ein Einschieben des Fluidleitungsendstücks ohne mechanische Sicherung wird somit vermieden.

Die optische und/oder akustische Signalisierung der Verbindung zwischen Fluidleitungsendstück und Schnellverbindungsvorrichtung und die Verwendung der Anlaufschrägen ermöglichen es in synergistischer Weise, die Zuverlässigkeit bei Einsatz in verwinkelten Bereichen zu verbessern, da die Montage erleichtert und der Erfolg der Montage auch ohne vollständige Sicht auf die Schnellverbindungsvorrichtung ermöglicht wird.

Die optische und/oder akustische Signalisierung der Herstellung einer ordnungsgemäßen Verbindung zwischen Fluidleitungsendstück und Schnellverbindungsvorrichtung wirkt auch synergistisch mit den getrennt realisierten Sicherungselementen zusammen, denn in verwinkelten Bereichen kann es mangels ausreichender Sicht durchaus zu unbeabsichtigter Betätigung eines der Sicherungselemente kommen, was durch die Signalisierung erkennbar sein kann, auch wenn beispielsweise nur eine seitliche Sicht auf die Schnellverbindungsvorrichtung möglich ist.

Ein weiterer, auch unabhängig realisierbarer Aspekt der vorliegenden Erfindung betrifft ein Schnellverbindungssystem mit einer vorschlagsgemäßen Schnellverbindungsvorrichtung und einem Fluidleitungsendstück.

Das Fluidleitungsendstück weist eine Hinterschneidung auf. Diese ist insbesondere gebildet durch einen radial erstreckten oder umlaufenden Wulst oder eine radiale, bevorzugt umlaufende, Nut. Es können jedoch allgemein, also auch andere, quer zur Einschubrichtung verlaufende und mit einer Flächennormalen entgegen der Einschubrichtung weisende Abschnitte des Rohrleitungsendstücks die Hinterschneidung sein oder bilden.

Eine "Hinterschneidung" im Sinne der vorliegenden Erfindung ist also vorzugsweise eine quer zur Einschubrichtung verlaufende und mit einer Flächennormalen entgegen der Einschubrichtung weisender Abschnitt des Rohrleitungsendstücks.

Die Sicherungselemente der Schnellverbindungsvorrichtung sind jeweils zum Hintergreifen der Hinterschneidung in einer gemeinsamen, quer zur Einschubrichtung des Fluidleitungsendstücks verlaufenden Verriegelungsebene ausgebildet. Hierdurch kann eine formschlüssige, insbesondere rastende Verbindung zwischen der Schnellverbindungsvorrichtung und dem Fluidleitungsendstück realisiert werden.

Insgesamt bewirken die vorgenannten Aspekte sowohl einzeln als auch insbesondere in Kombination in synergetischer Weise eine schnelle, sichere, zuverlässige und einfache Bedienung der Schnellverbindungsvorrichtung bzw. des Schnellverbindungssystems. Insbesondere wird das Sichern des Fluidleitungsendstücks gegen Entnahme und/oder das Entsichern des Fluidleitungsendstücks zur Entnahme erleichtert.

Ein "Fluidleitungsendstück" ist vorzugsweise ein Abschnitt am Ende einer Fluidleitung. Es handelt sich insbesondere um ein offenes Ende, durch das eine durch die Fluidleitung gebildete Passage für Fluid zugänglich ist. Bei der Fluidleitung handelt es sich insbesondere um ein Rohr oder einen Schlauch. Das Fluidleitungsendstück ist folglich bevorzugt ein offenes Rohr- und/oder Schlauchende. Alternativ oder zusätzlich ist das Fluidleitungsendstück ein Fitting, ein Verbindungsstück und/oder ein Verteilerstück für Fluidleitungen, z. B. für Rohre oder Schläuche, oder ein endseitiger Abschnitt hiervon.

Eine "Halteeinrichtung" ist vorzugsweise eine Einrichtung, die bevorzugt formschlüssig bzw. rastend die Trennung der Verbindung bzw. die Trennung von Schnellverbindungsvorrichtung und Fluidleitungsendstück blockiert bzw. verhindert. Mit anderen Worten hält die Halteeinrichtung die Schnellverbindungsvorrichtung und das Fluidleitungsendstück zusammen.

Der Begriff "Hinterschneidung" ist vorzugsweise zu verstehen als Fläche, die quer zur Einschubrichtung bzw. Symmetrieachse des Fluidleitungsendstücks verläuft und deren Flächennormale entgegen der Einschubrichtung weist, sodass ein Hintergreifen der Hinterschneidung eine Bewegung des Fluidleitungsendstücks relativ zu der Schnellverbindungsvorrichtung entgegen der Einschubrichtung formschlüssig blockiert/verhindert oder blockieren/verhindern kann.

Ein "Sicherungsabschnitt" im Sinne der vorliegenden Erfindung ist vorzugsweise eine Fläche, die derart ausgebildet und angeordnet ist, dass diese durch Hintergreifen der oder Eingreifen in die Hinterschneidung die Trennung von Schnellverbindungsvorrichtung und Fluidleitungsendstück blockiert oder verhindert. Hierbei kommt der Sicherungsabschnitt vorzugsweise in selbsthemmende Anlage an der Hinterschneidung, sodass an dem Fluidleitungsendstück entgegen der Einschubrichtung wirkende Kräfte durch die Hinterschneidung in Kontakt mit dem Sicherungsabschnitt abgeleitet werden, beispielsweise in ein Gehäuse der Schnellverbindungsvorrichtung.

Eine "Verriegelungsebene" im Sinne der vorliegenden Erfindung ist vorzugsweise eine Ebene, in der die Verriegelungselemente Abschnitte aufweisen, die innerhalb dieser Ebene bewegbar sind und durch die Bewegung die Hinterschneidung hintergreifen. Bevorzugt weisen die Abschnitte in der Verriegelungsebene liegende Flächen zur flächigen Anlage an der Hinterschneidung auf. Dies ist jedoch nicht zwingend, wenn auch zur Aufnahme und Ableitung von Kräften bevorzugt.

Eine "Entsicherungsposition" ist vorzugsweise eine Lage des Sicherungselements/Sicherungsabschnitts, in der dieses/r nicht in Eingriff mit der Hinterschneidung ist oder kommt. Mit anderen Worten überschneiden sich die Projektionen des Sicherungselements/Sicherungsabschnitts und der Hinterschneidung in Einschubrichtung nicht.

Eine "Sicherungsposition" ist das Gegenteil dessen, also eine Lage des Sicherungselements/Sicherungsabschnitts, in der dieses/r in Eingriff mit der Hinterschneidung ist oder kommt. Mit anderen Worten überschneiden sich die Projektionen des Sicherungselements/Sicherungsabschnitts und der Hinterschneidung in Einschubrichtung.

Die oben genannten Aspekte und weitere sich aus den Ansprüchen und der nachfolgenden Beschreibung ergebenden Aspekte und Merkmale können unabhängig und in jeder beliebigen Kombination realisiert werden.

Weitere Vorteile, Merkmale, Eigenschaften und Aspekte der vorliegenden Erfindung ergeben sich aus den Ansprüchen und der folgenden Beschreibung einer bevorzugten Ausführungsform anhand der Zeichnungen.

Es zeigt:
- Fig. 1: eine perspektivische Darstellung eines Schnellverbindungssystems mit einem in einer Schnellverbindungsvorrichtung gesicherten Fluidleitungsendstück diese Schnellverbindungsvorrichtung ist nicht Gegenstand der Erfindung;
- Fig. 2: einen Schnitt durch das Schnellverbindungssystem gemäß Fig. 1;
- Fig. 3: eine perspektivische Ansicht des Schnellverbindungssystems gemäß Fig. 1, wobei das Gehäuse der Schnellverbindungsvorrichtung ausgeblendet ist;
- Fig. 4: eine Seitenansicht des Schnellverbindungssystems gemäß Fig. 3;
- Fig. 5: eine Vorderansicht des Schnellverbindungssystems gemäß Fig. 3, wobei die Sicherungselemente in ihren Sicherungspositionen positioniert sind;
- Fig. 6: eine weitere Vorderansicht des Schnellverbindungssystems gemäß Fig. 3, wobei die Sicherungselemente in ihren Entsicherungspositionen positioniert sind;
- Fig. 7: eine Explosionsdarstellung der zwei Sicherungselemente der Schnellverbindungsvorrichtung gemäß den Fig. 1 und 3;
- Fig. 8: eine Vorderansicht der zwei ineinander eingesetzten Sicherungselemente gemäß Fig. 6;
- Fig. 9: eine perspektivische Ansicht eines Betätigungselements mit Rückstelleinrichtungen;
- Fig. 10: eine Vorderansicht des Betätigungselements gemäß Fig. 8;
- Fig. 11: das Gehäuse der Schnellverbindungsvorrichtung gemäß Fig. 1;
- Fig. 12: eine perspektivische Ansicht eines Sicherungsindikators zur optischen Signalisierung einer Sicherung des Fluidleitungsendstücks gegen Entnahme;
- Fig. 13: eine Seitenansicht des Sicherungsindikators gemäß Fig. 12;
- Fig. 14: eine Explosionsdarstellung einer vorschlagsgemäßen Schnellverbindungsvorrichtung gemäß einer zweiten Ausführungsform, die zum Gegenstand der Erfindung gehört;
- Fig. 15: eine Vorderansicht eines Sicherungselements gemäß der zweiten Ausführungsform;
- Fig. 16: eine perspektivische Darstellung eines Signalelements gemäß der zweiten Ausführungsform; und
- Fig. 17: einen Schnitt durch die Schnellverbindungsvorrichtung gemäß Fig. 14.

In den teilweise nicht maßstabsgerechten, nur schematischen Figuren werden für die gleichen oder ähnliche Teile dieselben Bezugszeichen verwendet, wobei entsprechende oder vergleichbare Eigenschaften und Vorteile erreicht werden können, auch wenn von einer wiederholten Beschreibung abgesehen wird.

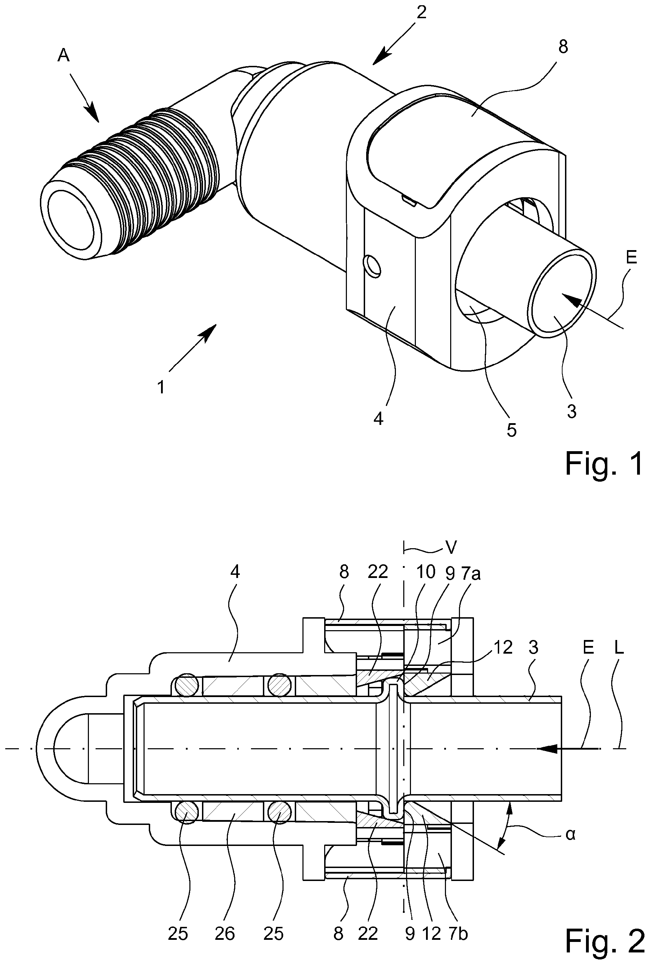

Fig. 1 zeigt ein Schnellverbindungssystem 1 mit einer Schnellverbindungsvorrichtung 2 gemäß einer ersten nicht erfindungsgemäßen Ausführungsform und einem Fluidleitungsendstück 3, wobei das Fluidleitungsendstück 3 in der Schnellverbindungsvorrichtung 2 gehalten und gegen Entnahme gesichert ist.

Im Darstellungsbeispiel gemäß Fig. 1 ist das Fluidleitungsendstück 3 in die Schnellverbindungsvorrichtung 2 einsetzbar, insbesondere einschiebbar. Hierzu kann das Fluidleitungsendstück 3 in die Schnellverbindungsvorrichtung 2 in eine Einschubrichtung E aufeinander zu bewegt werden. Das Fluidleitungsendstück 3 ist in Einschubrichtung E in die Schnellverbindungsvorrichtung 2 einschiebbar bzw. die Schnellverbindungsvorrichtung 2 ist auf das Fluidleitungsendstück 3 aufsetzbar oder aufschiebbar (entlang bzw. entgegen der Einschubrichtung). Hierdurch kann eine durchgehende fluidische und/oder mechanische Verbindung des Fluidleitungsendstücks 3 mit der Schnellverbindungsvorrichtung 2 erzeugt werden.

Die Schnellverbindungsvorrichtung 2 weist vorzugsweise ein Gehäuse 4 auf. Das Gehäuse 4 weist im Darstellungsbeispiel eine Durchführung 5 bzw. einen Durchbruch zur Aufnahme des Fluidleitungsendstücks 3 auf. Durch die Durchführung 5 ist das Fluidleitungsendstück 3 entlang einer Einschubrichtung E in die Schnellverbindungsvorrichtung 2, vorzugsweise durch die Durchführung 5 des Gehäuses 4, einschiebbar und/oder einsteckbar. Hier sind jedoch auch andere Lösungen möglich.

Das Fluidleitungsendstück 3 ist gegen Entnahme bzw. Entfernen aus der Schnellverbindungsvorrichtung 2 sicherbar. Insbesondere ist die Schnellverbindungsvorrichtung 2 dazu ausgebildet, das Fluidleitungsendstück 3 - bevorzugt formschlüssig - zu halten. Insbesondere sichert die Schnellverbindungsvorrichtung 2 das Fluidleitungsendstück 3 gegen Trennen, Abnehmen und/oder Entnehmen von oder aus der Schnellverbindungsvorrichtung 2.

Die Schnellverbindungsvorrichtung 2 bzw. das Gehäuse 4 weist vorzugsweise einen Anschlussabschnitt A zum Anschließen eines weiteren Fluidleitungsendstücks auf. Bevorzugt ist der Anschlussabschnitt A auf einer der Durchführung 5 abgewandten Seite des Gehäuses 4 angeordnet.

Die Schnellverbindungsvorrichtung 2 kann eine durchgehende Fluidverbindung bzw. Passage für Flüssigkeiten oder Gase zwischen dem Fluidleitungsendstück 3 und dem Anschlussabschnitt A bzw. dem weiteren Fluidleitungsendstück herstellen oder bilden.

Der Anschlussabschnitt A kann ein Fluidleitungs-Anschlussmittel wie ein Schlauchnippel, ein Fitting oder ein sonstiger Konnektor zur Herstellung einer Fluidverbindung sein oder aufweisen. Der Anschlussabschnitt A kann ein Adapter oder Schlauchnippel, insbesondere für Wellrohr, sein oder aufweisen. Der Anschlussabschnitt A kann ein Rohr mit oder ohne Strukturierung auf seiner äußeren Umfangsfläche sein oder aufweisen. Hierbei weist der Anschlussabschnitt A vorzugsweise sich radial erstreckende abwechselnde Wellen und Täler bzw. Wulste und Nuten auf, bevorzugt achsensymmetrisch zu einer Mittel- oder Symmetrieachse des Anschlussabschnitts A. Diese können zu einer (inneren) Oberflächenstruktur eines Schlauchs korrespondieren und/oder zu dessen dichter Anbindung dienen (nicht dargestellt).

Bevorzugt ist der Anschlussabschnitt A zum Anschließen eines Fluidleitungsendstücks ausgebildet, das anders ausgebildet ist als das Fluidleitungsendstück 3. Die Schnellverbindungsvorrichtung 2 adaptiert hierbei unterschiedliche Fluidleitungen, indem sie eine durchgehende fluidische und/oder mechanische Verbindung herstellt, die zur Umgebung hin geschlossen ist.

Vorzugsweise ist das Fluidleitungsendstück 3 ein offenes Ende eines starren Rohrs, wohingegen das weitere Fluidleitungsendstück, das mit dem Anschlussabschnitt A verbunden oder verbindbar ist, ein Endstück eines flexiblen Schlauches, anderen Rohrs oder einer sonstigen, anderen oder gleichartigen, Fluidleitung ist.

Durch die Schnellverbindungsvorrichtung 2 können zwei Fluidleitungsendstücke zueinander fluchtend und/oder rechtwinklig zueinander verlaufend miteinander verbunden werden. Hierzu kann der Anschlussabschnitt A abgewinkelt sein, wie beispielsweise in Fig. 1 dargestellt.

Das Fluidleitungsendstück 3 ist vorzugsweise rund, zumindest im Wesentlichen zylindrisch und/oder rotationssymmetrisch zu einer Längsachse L ausgebildet und/oder weist einen kreisförmigen Querschnitt, insbesondere senkrecht zur Längsachse L, auf. Die Längsachse L verläuft vorzugsweise mittig entlang eines durch das Fluidleitungsendstück gebildeten Kanals. Vorzugsweise weist das Fluidleitungsendstück 3 eine zylindrische bzw. zylindermantelförmige Wandung auf, die den Kanal begrenzt.

Die Einschubrichtung E verläuft vorzugsweise parallel zur Symmetrie- oder Längsachse L des Fluidleitungsendstücks 3. Im Darstellungsbeispiel liegen die Einschubrichtung E und die Symmetrie- oder Längsachse L übereinander, sind also identisch.

Fig. 2 zeigt einen Längsschnitt des Schnellverbindungssystems 1 in einer Ebene, die die Einschubrichtung E und/oder die Längsachse L des Fluidleitungsendstücks 3 einschließt.

In Fig. 2 ist das das Fluidleitungsendstück 3 formschlüssig an oder in der Schnellverbindungsvorrichtung 2 gegen Entnahme gesichert. Hierzu hintergreift die Schnellverbindungsvorrichtung 2 zum Halten bzw. Sichern des Fluidleitungsendstücks 3 mit einer Halteeinrichtung 6 eine Hinterschneidung 10 des Fluidleitungsendstücks 3. Auf diese Weise wird eine Verriegelung des Fluidleitungsendstücks 3 in oder an der Schnellverbindungsvorrichtung 2 erreicht.

Die Halteeinrichtung 6 ermöglicht vorzugsweise die Herstellung einer reversiblen Verbindung. Hierzu kann die Halteeinrichtung 6 einerseits ein Trennen des Fluidleitungsendstücks 3 von der Schnellverbindungsvorrichtung 2 blockieren oder verhindern, wie in Fig. 2 dargestellt. Andererseits kann die Halteeinrichtung 6 die Verbindung zum Lösen freigeben. Hierzu kann die Halteeinrichtung 6 die Verriegelung aufheben, wobei die Hinterschneidung 10 nicht mehr hintergriffen wird. Diese Entriegelung erfolgt vorzugsweise manuell.

Im Darstellungsbeispiel weist die Halteeinrichtung 6 ein Sicherungselement 7a und ein weiteres Sicherungselement 7b, insgesamt also zwei Sicherungselemente 7a, 7b, auf. Grundsätzlich kann es jedoch auch mehr als zwei Sicherungselemente 7a, 7b geben.

Die Sicherungselemente 7a, 7b der Halteeinrichtung 6 sind separat bzw. unabhängig voneinander bewegbar. Es ist also möglich, dass nur eines der Sicherungselemente 7a, 7b bewegt wird, während das andere Sicherungselement 7a, 7b seine Position nicht verändert und umgekehrt.

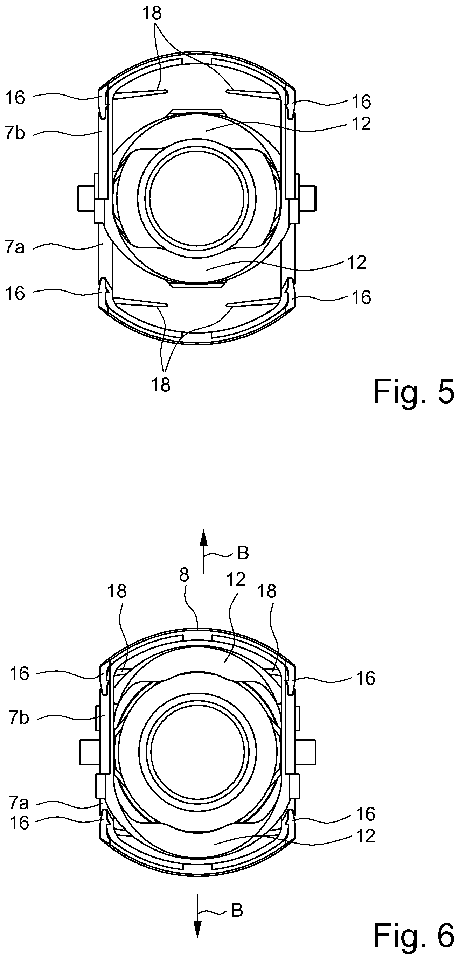

Jedes der Sicherungselemente 7a, 7b ist in einer Sicherungsposition SP (siehe Fig. 5) und in einer Entsicherungsposition EP (siehe Fig. 6) positionierbar und/oder zwischen der Sicherungsposition SP und der Entsicherungsposition EP, insbesondere linear oder geradlinig, bewegbar.

Weiter kann die Halteeinrichtung 6 Betätigungselemente 8 zum Betätigen der Sicherungselemente 7a, 7b aufweisen. Vorzugsweise ist jedem der Sicherungselemente 7a, 7b ein Betätigungselement 8 zugeordnet. Insbesondere weisen die Sicherungselemente 7a, 7b jeweils ein Betätigungselement 8 auf. Bevorzugt ist jeweils ein Betätigungselement 8 mit jedem der Sicherungselemente 7a, 7b verbunden, bevorzugt formschlüssig und/oder rastend, oder angeformt bzw. einstückig hiermit gebildet.

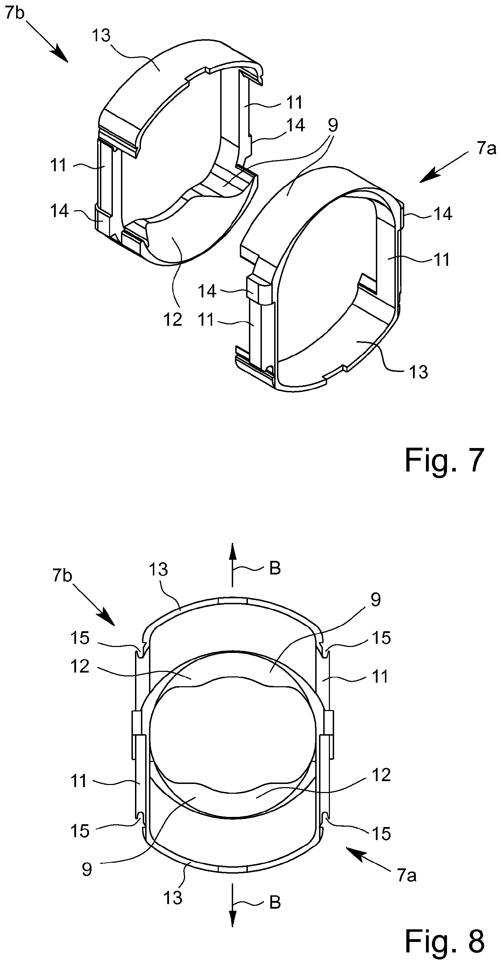

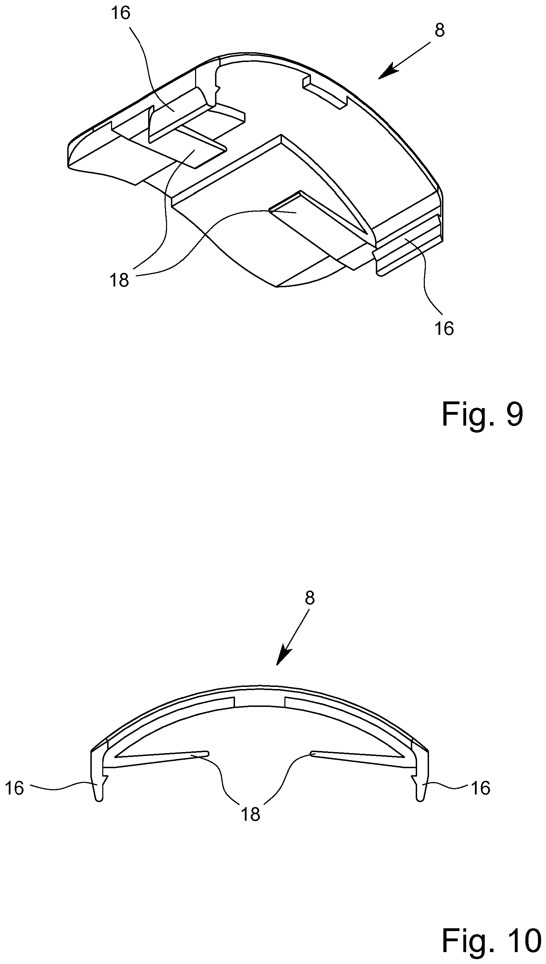

Die Betätigungselemente 8 sind dazu ausgebildet, durch manuelle Betätigung einer Betätigungs-Oberfläche, die im Einbauzustand von außen zur manuellen Betätigung zugänglich ist, das dem jeweiligen Betätigungselement 8 zugeordnete Sicherungselement 7a, 7b zu bewegen. Hierbei ist bevorzugt vorgesehen, dass eine Betätigung des jeweiligen Betätigungselements 8 das diesem zugeordnete Sicherungselement 7a, 7b in eine Entsicherungsposition EP bewegt. Eine Rückstelleinrichtung 18 (vgl. Fig. 9 und 10) kann vorgesehen sein, um das Betätigungselement 8 jeweils mit dem diesem zugeordneten oder hieran befestigtem Sicherungselement 7a, 7b in eine Sicherungsposition SP zu bewegen bzw. vorzuspannen. Weitere Eigenschaften und Vorteile der Betätigungselemente 8 werden später anhand der Fig. 8ff im Detail erläutert.

Die Sicherungselemente 7a, 7b sind im Darstellungsbeispiel ähnlich bzw. gleichartig. Sie sind flächenbündig mit dem Gehäuse 4 angeordnet. Sie können manuell in das Gehäuse 4 gedrückt werden. Hierbei werden die Sicherungselemente 7a, 7b in die Entsicherungsposition E bewegt, um eine Trennung zu ermöglichen, also ein Auseinanderziehen der Schnellverbindungsvorrichtung 2 und des Fluidleitungsendstück 3 entgegen der Einschubrichtung E freizugeben.

Vorzugsweise weist jedes der Sicherungselemente 7a, 7b einen Sicherungsabschnitt 9 auf. Im Darstellungsbeispiel gemäß Fig. 2 sind die Sicherungsabschnitte als zum rastenden Eingriff ausgebildete Flanken ausgebildet oder weisen solche auf. Hier sind jedoch grundsätzlich auch andere Konstruktionen denkbar, bei denen die Sicherungsabschnitte 9 dazu ausgebildet sind, das Fluidleitungsendstück 3 zu halten oder zu befestigen, sodass eine unbeabsichtigte Trennung der Schnellverbindungsvorrichtung 2 von dem Fluidleitungsendstück 3 verhindert wird.

Das Fluidleitungsendstück 3 weist vorzugsweise eine Hinterschneidung 10 auf, die in Fig. 2 durch eine Flanke eines radial vorstehenden Wulstes gebildet ist. Die Hinterscheidung 10 kann jedoch auch durch eine Nut, eine oder mehrere Vertiefungen wie z. B. Rillen oder eine oder mehrere Ausbuchtungen gebildet sein. Vorzugsweise umgibt oder umläuft die Hinterschneidung 10 das Fluidleitungsendstück 3 vollständig, sie kann aber alternativ auch unvollständig, teilweise oder lediglich abschnittsweise umlaufend und/oder axial (entlang der Einschubrichtung E) versetzt bzw. erstreckt vorgesehen sein. Bevorzugt handelt es sich jedoch um zur Einschubrichtung E achsensymmetrische bzw. rotationssymmetrische Strukturen wie eine oder mehrere Ringwulst, Ringnuten, Ringe, ringförmige Stege o. dgl.

Die Hinterschneidung 10 ist zur Sicherung des Fluidleitungsendstücks 3 an der Schnellverbindungsvorrichtung 2 vorzugsweise durch die Sicherungselemente 7a, 7b hintergreifbar. Wenn die Hinterschneidung 10 durch eine Nut realisiert ist, greifen die Sicherungselemente 7a, 7b zur Sicherung des Fluidleitungsendstücks 3 an der Schnellverbindungsvorrichtung 2 in diese ein. Im Darstellungsbeispiel ist die Hinterschneidung 10 durch die Flanke einer Wulst gebildet.

Die Hinterschneidung 10 weist eine Flächennormale auf, die entgegen der Einschubrichtung E gerichtet ist. Die Sicherungselemente 7a, 7b sind dazu ausgebildet, die Hinterschneidung 10 zu hintergreifen, wenn die Sicherungselemente 7a, 7b von der Entsicherungsposition EP in die Sicherungsposition SP bewegt werden (quer zu der Flächennormalen). Auf diese Weise wird das Fluidleitungsendstück an der Schnellverbindungsvorrichtung 2 formschlüssig, insbesondere rastend, gehalten.

Mit anderen Worten bilden die Sicherungselemente 7a, 7b Riegel oder Fallen, die das Fluidleitungsendstück 3 hintergreifen, wodurch das Fluidleitungsendstück 3 an bzw. in der Schnellverbindungsvorrichtung 2 gehalten wird.

Die Sicherungselemente 7a, 7b sind im Bereich ihrer Sicherungsabschnitte 9 zum Hintergreifen der Hinterschneidung 10 des Fluidleitungsendstücks 3 in einer gemeinsamen, quer - besonders bevorzugt senkrecht - zur Einschubrichtung E verlaufenden Verriegelungsebene V ausgebildet. Vorzugsweise begrenzen die Sicherungselemente 7a, 7b - insbesondere die Sicherungsabschnitte 9 - die Verriegelungsebene V.

In der Verriegelungsebene V liegt die Hinterschneidung 10, jedenfalls beim Einwirken einer Kraft auf das Fluidleitungsendstück 3 entgegen der Einschubrichtung E, an den Sicherungsabschnitten 9 an. Auf diese Weise kann sich das Fluidleitungsendstück 3 abstützen.

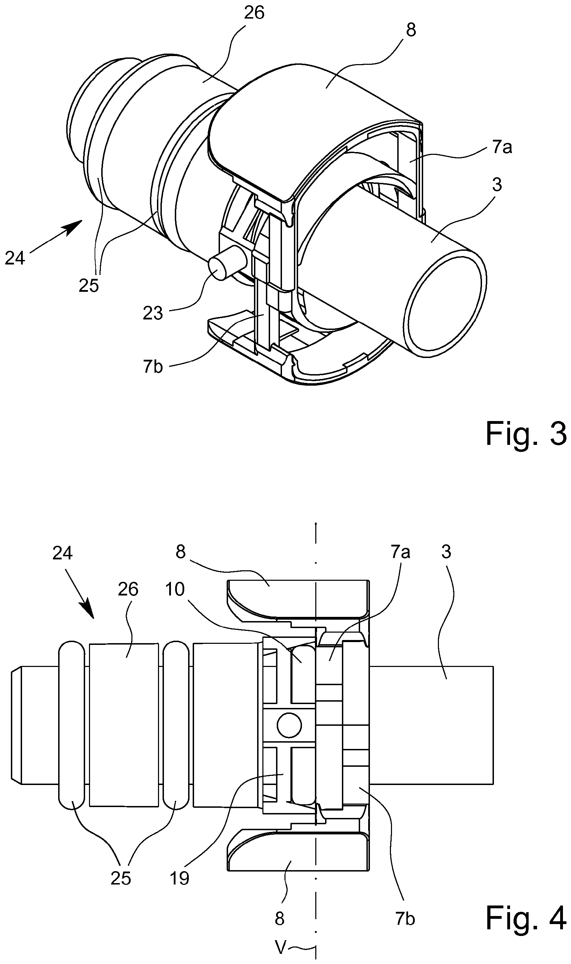

In den Fig. 3, 4, 5 und 6 ist das Schnellverbindungssystem 1 in verschiedenen Ansichten gezeigt, wobei zum besseren Verständnis das Gehäuse 4 nicht dargestellt ist.

Die Richtung, in der die Sicherungselemente 7a, 7b bewegbar sind, wird auch Bewegungsrichtung B genannt. Die Bewegungsrichtung B verläuft quer, insbesondere senkrecht zur Einschubrichtung E. Die Bewegung der Sicherungselemente 7a, 7b erfolgt insbesondere geradlinig, linear und/oder vor und zurück, und/oder ist entsprechend geführt. Ferner sind die Sicherungselemente 7a, 7b bevorzugt gegeneinander und/oder, insbesondere gleichzeitig, in entgegengesetzte Richtungen bewegbar.

Die Sicherungsposition SP ist eine Position, in der das Sicherungselement 7a, 7b bzw. dessen Sicherungsabschnitt 9 die Hinterschneidung 10 hintergreift. Die Entsicherungsposition EP ist vorzugsweise eine Position, in der das Sicherungselement 7a, 7b bzw. dessen Sicherungsabschnitt 9 die Hinterschneidung 10 des Fluidleitungsendstücks 3 nicht hintergreift. In den Fig. 3, 4 und 5 befinden sich die Sicherungselemente 7a, 7b jeweils in ihrer Sicherungsposition SP. In Fig. 6 befinden sich die Sicherungselemente 7a, 7b jeweils in ihrer Entsicherungsposition EP.

Vorzugsweise sind die Entsicherungsposition EP und die Sicherungsposition SP Endpositionen möglicher Bewegungen der Sicherungselemente 7a, 7b, insbesondere entlang der Bewegungsrichtung B. Vorzugsweise ist das Fluidleitungsendstück 3 durch Positionieren mindestens eines der Sicherungselemente 7a, 7b in seiner Sicherungsposition SP, vorzugsweise durch Hintergreifen der Hinterschneidung 10 mit dem Sicherungsabschnitt 9 des Sicherungselements 7a, 7b, gegen Entnahme sicherbar.

Besonders bevorzugt erfordert die Entnahme des Fluidleitungsendstücks 3, dass die zwei Sicherungselemente 7a, 7b gleichzeitig in ihren Entsicherungspositionen EP positioniert sind. Hierdurch ist eine Entnahme des Fluidleitungsendstücks 3 nicht möglich und/oder ist das Fluidleitungsendstück 3 in der Schnellverbindungsvorrichtung 2 gesichert, wenn nur eines der Sicherungselemente 7a, 7b sich in seiner Entsicherungsposition EP befindet bzw. in seiner Entsicherungsposition EP positioniert ist.

Die Sicherungselemente 7a, 7b und/oder deren Sicherungsabschnitte 9 zum Hintergreifen der Hinterschneidung 10 sind vorzugsweise in Bezug auf die Längsachse bzw. Einschubrichtung E auf verschiedenen und/oder gegenüberliegenden Seiten des Fluidleitungsendstücks 3 angeordnet.

In der folgenden detaillierteren Beschreibung der Halteeinrichtung 6 bzw. der Sicherungselemente 7a, 7b wird insbesondere auf die Fig. 7 und 8 Bezug genommen, in denen die Sicherungselemente 7a, 7b zur Verdeutlichung ohne weitere Teile des Schnellverbindungssystems 1 oder der Schnellverbindungsvorrichtung 2 gezeigt sind.

Die Sicherungselemente 7a, 7b sind ähnlich ausgebildet. Vorzugsweise sind die Sicherungsabschnitte 9 der beiden Sicherungselemente 7a, 7b identisch ausgebildet.

Die Sicherungselemente 7a, 7b sind in oder an dem Gehäuse 4 gegen eine Bewegung entlang, insbesondere entgegen, der Einschubrichtung E gesichert. Im Darstellungsbeispiel werden die Sicherungselemente 7a, 7b hierzu in dem bzw. durch das Gehäuse 4 geführt. Hierbei sind die Sicherungselemente 7a, 7b zu dem Gehäuse 4 derart komplementär gebildet, dass die Sicherungselemente 7a, 7b in dem Gehäuse 4 gegen eine Bewegung entlang, insbesondere entgegen, der Einschubrichtung E gesichert sind.

Die Sicherungselemente 7a, 7b weisen jeweils mindestens einen, vorzugsweise zwei, Führungsabschnitte 11 auf. Die Führungsabschnitte 11 grenzen im Darstellungsbeispiel an unterschiedlichen Enden des Sicherungsabschnitts 9 an. Die Führungsabschnitte 11 können zusammen mit dem Sicherungsabschnitt 9 zumindest im Wesentlichen die Form eines großen U oder eine geschlossene Form bilden.

Insbesondere sind die Führungsabschnitte 11 eines Sicherungselements 7a, 7b und/oder zweier verschiedener Sicherungselemente 7a, 7b parallel zueinander angeordnet.

Die Führungsabschnitte 11 laufen oder gleiten zur Führung der Sicherungselemente 7a, 7b aneinander entlang bzw. sind dazu ausgebildet. Diese Führungsabschnitte 11 ermöglichen insbesondere ein lineares Aneinander-Entlanggleiten der Sicherungselemente 7a, 7b.

Im Darstellungsbeispiel sind die Führungsabschnitte 11 zweier zueinander korrespondierender bzw. komplementärer Sicherungselemente 7a, 7b als zueinander korrespondierende oder komplementäre Gleitflächen gebildet, die bevorzugt parallel zur Verriegelungsebene V verlaufen.

Die Führungsabschnitte 11 sind vorzugsweise dazu ausgebildet, dass sich die Sicherungselemente 7a, 7b in oder entgegen der Einschubrichtung E aneinander abstützen. Die Führungsabschnitte 11 jedes der Sicherungselemente 7a, 7b sind vorzugsweise angrenzend an den Sicherungsabschnitt 9 vorgesehen. Im Einbauzustand umgreifen die Sicherungsabschnitte 9 mit den Führungsabschnitten 11 das Fluidleitungsendstück 3.

Im Darstellungsbeispiel sind die Sicherungselemente 7a, 7b symmetrisch zu einer Ebene, die durch die Einschubrichtung E und die Bewegungsrichtung B aufgespannt ist. Hier sind jedoch auch andere Lösungen möglich.

Der jeweilige Sicherungsabschnitt 9 überragt vorzugsweise die Führungsabschnitte 11, besonders bevorzugt entlang der Einschubrichtung E. Besonders bevorzugt überragt bei einem der Sicherungselemente 7a, 7b der Sicherungsabschnitt 9 die Führungsabschnitte 11 in Einschubrichtung E und/oder überragt der Sicherungsabschnitt 9 die Führungsabschnitte 11 des anderen Sicherungselements 7a, 7b entgegen der Einschubrichtung E.

Eines der oder beide Sicherungselemente 7a, 7b weisen vorzugsweise (jeweils) eine Auflaufschräge 12 auf. In einer besonders bevorzugten Ausführungsform, die auch in den Figuren gezeigt ist, weist das jeweilige Sicherungselement 7a, 7b an dem Sicherungsabschnitt 9, bevorzugt auf einer der Verriegelungsebene V abgewandten Seite, die Auflaufschräge 12 auf.

Die Auflaufschrägen 12 sind dazu ausgebildet, durch Einwirkung des Fluidleitungsendstücks 3 bzw. Druck auf die Auflaufschrägen 12 in die Einschubrichtung E die Sicherungselemente 7a, 7b in die Entsicherungsposition EP zu bewegen.

Die Auflaufschrägen 12 sind hierbei vorzugsweise derart angeordnet, dass sie einen Öffnungsquerschnitt in Einschubrichtung E verengen bzw. verjüngen. Die jeweilige Auflaufschräge 12 schließt beispielsweise einen Winkel α von weniger als 40°, besonders bevorzugt weniger als 30°, und/oder mehr als 10°, besonders bevorzugt mehr als 20°, mit der Einschubrichtung E ein.

Die Sicherungsabschnitte 9 sind zur Anlage an dem Fluidleitungsendstück 3 ausgebildet. Hierzu verlaufen Ränder der Sicherungselemente 7a, 7b auf einer dem Fluidleitungsendstück 3 zugewandten Seite zumindest abschnittsweise komplementär zu einer Kontur des Fluidleitungsendstücks 3, sodass das Fluidleitungsendstück nicht nur punktuell auf die Auflaufschrägen 12 trifft und/oder die Sicherungselemente 7a, 7b die Hinterschneidung 10 nicht nur punktuell hintergreifen. Der Verlauf der Ränder ist vorzugsweise ein zu einem rohrförmigen Fluidleitungsendstück 3 komplementärer Kreisbogenabschnitt. Der Verlauf kann einen Radius aufweisen, der dem Außenradius des Fluidleitungsendstücks 3 zumindest im Wesentlichen entspricht. Dies ermöglicht eine leichte Herstellung der Verbindung und/oder eine robuste Sicherung durch große Anlageflächen und gute Kraftverteilung bzw. -ableitung.

Vorzugsweise weist jedes der Sicherungselemente 7a, 7b auf seiner dem Sicherungsabschnitt 9 abgewandten oder gegenüberliegenden Seite einen Betätigungsabschnitt 13 auf, der durch das bevorzugt separat gebildete, mit dem übrigen Sicherungselement 7a, 7b bevorzugt formschlüssig verbundene Betätigungselement 8 gebildet sein kann.

Es ist alternativ möglich, dass eines der Sicherungselemente 7a, 7b einen angeformten oder einstückig mit dem Sicherungselement 7a, 7b gebildeten Betätigungsabschnitt 13 aufweist, während nur das andere der Sicherungselemente 7a, 7b mit einem separat realisierten Betätigungselement 8 verbindbar oder verbunden ist.

Der Betätigungsabschnitt 13 bildet bevorzugt eine Außenfläche der Schnellverbindungsvorrichtung 2. Der Betätigungsabschnitt 13 ist eine Außenfläche des jeweiligen Sicherungselements 7a, 7b, das durch manuelle Druckbeaufschlagung im Betätigungsabschnitt 13 aus seiner Sicherungsposition SP in die Entsicherungsposition EP verschoben wird / verschiebbar ist.

Die Betätigungsabschnitte 13 der Sicherungselemente 7a, 7b sind vorzugsweise an gegenüberliegenden Seiten der Schnellverbindungsvorrichtung 2 angeordnet. Die Sicherungselemente 7a, 7b sind mittels der Betätigungsabschnitte 13 in entgegengesetzte Richtungen aufeinander zu bzw. jeweils in die Schnellverbindungsvorrichtung 2 hinein bewegbar, wodurch die Sicherungselemente 7a, 7b aus ihren Sicherungspositionen SP in ihre Entsicherungspositionen EP verschoben werden bzw. verschiebbar sind.

Vorzugsweise überragt der Betätigungsabschnitt 13 bzw. das Betätigungselement 8 die Sicherungselemente 7a, 7b, jedenfalls die Führungsabschnitte 11, entlang der Einschubrichtung E. Hierdurch kann eine Abdeckung und/oder Sicherung der Sicherungselemente 7a, 7b gegen Herausfallen aus dem Gehäuse 4 erreicht werden.

Vorzugsweise bilden der Betätigungsabschnitt 13, der Sicherungsabschnitt 9 und die Führungsabschnitte 11 eine in sich geschlossene Struktur mit einer Durchbrechung zur Durchführung des Fluidleitungsendstücks 3. Insbesondere ist das jeweilige Sicherungselement 7a, 7b mit dem Sicherungsabschnitt 9, den Führungsabschnitten 11 und dem Betätigungsabschnitt 13 ringartig ausgebildet.

Die Führungsabschnitte 11 können zusammen mit dem den Sicherungsabschnitt 9 bildenden Teil der Sicherungselemente 7a, 7b eine U-förmige Struktur bilden, die durch Anbringung des Betätigungselements 8 zu einer geschlossenen bzw. ringartigen Form ergänzt wird.

Im Ergebnis sind die Sicherungselemente 7a, 7b in Gebrauchslage bevorzugt ringartig geschlossene Elemente, die aneinander anliegen, aneinander entlang verschiebbar sind und seitlich ineinander eingreifen. Hierbei ist das Fluidleitungsendstück 3 durch beide Sicherungselemente 7a, 7b bzw. durch den jeweils durch das Sicherungselement 7a, 7b gebildeten Ring durchführbar.

Vorzugsweise sind das Gehäuse 4 und das/die Sicherungselement/e 7a, 7b zueinander komplementär, sodass die Sicherungselemente 7a, 7b in dem Gehäuse 4 quer oder senkrecht zur Einschubrichtung E geführt sind.

Im Darstellungsbeispiel weisen die Sicherungselemente 7a, 7b ein, insbesondere zu einem entsprechenden Abschnitt des Gehäuses 4 komplementär ausgebildetes, Führungselement 14 auf. Das Führungselement 14 kann ein vorstehendes Element sein, insbesondere wobei dieses mit einer Ausnehmung, z. B. einer Führungsschiene, des Gehäuses 4 korrespondiert bzw. komplementär hierzu ausgebildet ist. Es ist also möglich, dass das Gehäuse 4 Führungselemente 14 aufweist und dass die Sicherungselemente 7a, 7b dazu korrespondierende Führungselemente 14 wie Ausnehmungen, Einbuchtungen oder Führungsschienen aufweisen.

Vorzugsweise greifen die Sicherungselemente 7a, 7b ineinander ein und/oder sind die Sicherungselemente 7a, 7b in Bewegungsrichtung B aneinander geführt.

Im Darstellungsbeispiel liegt oder grenzt der Sicherungsabschnitt 9 eines der Sicherungselemente 7a, 7b jeweils an den Führungsabschnitten 11 des anderen der Sicherungselemente 7a, 7b, insbesondere innenseitig und/oder quer zur Einschubrichtung E, an. Hier sind jedoch auch andere Lösungen möglich.

Mindestens eines der Sicherungselemente 7a, 7b, bevorzugt jedoch beide Sicherungselemente 7a, 7b, sind mehrteilig aufgebaut. Hierbei ist das Betätigungselement 8 von dem übrigen Sicherungselement 7a, 7b zunächst getrennt realisiert und kann bei der Montage hiermit verbunden werden, so dass im Ergebnis das/die Sicherungselemente 7a, 7b aus dem Betätigungselement 8 und einem zweiten Teil gebildet ist/sind, wobei der zweite Teil den Sicherungsabschnitt 9 aufweist oder bildet. Die zweiteilige Ausbildung der Sicherungselemente 7a, 7b bietet den Vorteil einer einfachen sowie zuverlässigen Montage.

Für die Montage sind die ineinandergreifenden Sicherungselemente 7a, 7b vorzugsweise quer zur Einschubrichtung E in das Gehäuse einschiebbar. Weiter bevorzugt sind die Sicherungselemente 7a, 7b mit Hilfe eines Betätigungselements 8 in dem Gehäuse 4 gehalten.

Das Betätigungselement 8 ist vorzugsweise formschlüssig und/oder kraftschlüssig, insbesondere rastend, mit dem übrigen Sicherungselement 7a, 7b verbindbar. Insbesondere ist das Betätigungselement 8 mit offenen Enden der Führungsabschnitte 11 verbindbar. Die Führungsabschnitte 11 können zu diesem Zweck endseitig Befestigungseinrichtungen aufweisen, die zu Befestigungseinrichtungen der Betätigungselemente 8 korrespondieren. Diese Befestigungseinrichtungen sind bevorzugt zur rastenden Befestigung der Betätigungselemente 8 oder Befestigung der Betätigungselemente 8 durch Klipsen ausgebildet.

Insbesondere weisen die Führungsabschnitte 11 und die Betätigungsabschnitte 13 zum formschlüssigen Verbinden des Sicherungselements 7a, 7b mit dem Betätigungselement 8 Rastmittel wie Rastvertiefungen 15 und Rastvorsprünge 16 auf.

Im Darstellungsbeispiel sind die Rastvertiefungen 15 außenseitig bzw. stirnseitig an dem Sicherungselement 7a, 7b sowie auf einer den Betätigungsabschnitten 13 abgewandten Seite der Betätigungselemente 8 angeordnet. Das Betätigungselement 8 weist entsprechend komplementär zu den Rastvertiefungen 15 ausgebildete Rastvorsprünge 16 auf.

Sofern nur ein separat realisiertes Betätigungselement 8 vorgesehen ist, ist es selbstverständlich auch möglich, dass die Sicherungselemente 7a, 7b keine Rastvertiefungen 15 aufweisen. Zudem ist eine umgekehrte Anordnung möglich, das heißt, es ist auch möglich, dass das Betätigungselement 8 Rastvertiefungen 15 und das Sicherungselement dazu komplementär ausgebildete Rastvorsprünge 16 aufweist.

Bei der folgenden Beschreibung des Betätigungselements 8 bzw. der Betätigungselemente 8 wird vorrangig auf die Fig. 9 und 10 Bezug genommen, in denen das Betätigungselement 8 in verschiedenen Ansichten gezeigt ist.

Das Betätigungselement 8 ist zum Bewegen der Sicherungselemente 7a, 7b ausgebildet.

Weiter ist es für das Herstellen der Schnellverbindungsvorrichtung 2 vorteilhaft, dass jedenfalls ein Betätigungselement 8 baulich von den Sicherungselementen 7a, 7b getrennt realisiert ist. Im Darstellungsbeispiel ist jedem Sicherungselement 7a, 7b ein Betätigungselement 8 zugeordnet, sodass die Schnellverbindungsvorrichtung 2 zwei Betätigungselemente 8 aufweist.

Vorzugsweise hält das Betätigungselement 8 das Sicherungselement 7a, 7b, in dem Gehäuse 4. Hierzu sind die Betätigungselemente 8 in dafür vorgesehenen Betätigungsöffnungen 17 des Gehäuses 4 angeordnet, was insbesondere in Fig. 1 dargestellt ist. Die Betätigungselemente 8 überdecken Gehäuseteile, sodass die Betätigungselemente 8 nicht in das Gehäuse 4 hinein oder durch das Gehäuse 4 hindurchrutschen können.

Vorzugsweise schließen die Betätigungselemente 8 bündig mit den Betätigungsöffnungen 17 des Gehäuses ab, insbesondere wenn das dem Betätigungselement 8 zugeordnete Sicherungselement 7a, 7b bzw. das mit dem Betätigungselement 8 verbundene Sicherungselement 7a, 7b in seiner Sicherungsposition SP positioniert ist.

Das Sicherungselement 7a, 7b ist durch Bewegen, z. B. durch Herunterdrücken oder Hereindrücken des Betätigungselements 8 in die Betätigungsöffnung 17 in Richtung der Entsicherungsposition EP bewegbar und/oder von seiner Sicherungsposition SP in seine Entsicherungsposition EP bewegbar.

Die Halteeinrichtung 6 weist vorzugsweise mindestens eine, besonders bevorzugt zwei oder vier, Rückstelleinrichtungen 18 auf. Die Rückstelleinrichtung 18 ist zum Bewegen der Sicherungselemente 7a, 7b in ihre Sicherungsposition SP oder in Richtung ihrer Sicherungsposition SP ausgebildet. Besonders bevorzugt sind die Sicherungselemente 7a, 7b durch die Rückstelleinrichtung 18 in der Schnellverbindungsvorrichtung 2 in ihre Sicherungsposition SP oder in Richtung ihrer Sicherungsposition SP vorspannbar und/oder vorgespannt.

Durch die Rückstelleinrichtung 18 sind die Sicherungselemente 7a, 7b automatisch in ihre Sicherungsposition SP bewegbar und/oder in ihrer Sicherungsposition SP positionierbar. Hierzu ist eine manuelle Betätigung der Sicherungselemente 7a, 7b nicht erforderlich, da die automatische Bewegung der Sicherungselemente 7a, 7b durch die Rückstelleinrichtung 18 bzw. die Rückstelleinrichtungen 18 bewirkt bzw. verursacht wird.

In der in den Figuren gezeigten bevorzugten Ausführungsform weist das Betätigungselement 8 zwei Rückstelleinrichtungen 18 auf, die im gezeigten Beispiel als flexible Laschen oder Blattfedern ausgebildet sind. Alternativ kann das Betätigungselement 8 nur eine oder mehr als zwei Rückstelleinrichtungen 18 und/oder andere Spannelemente wie Spiralfedern aufweisen.

Alternativ oder zusätzlich weisen die Sicherungselemente 7a, 7b (anstelle des Betätigungselements 8) die Rückstelleinrichtungen 18 auf. Des Weiteren ist es auch möglich, dass die Rückstelleinrichtung 18 an der Halteeinrichtung 6 angeordnet ist. Beispielsweise ist hier eine Konstruktion über Ringfedern denkbar.

Die Sicherungselemente 7a, 7b sind vorzugsweise in ihre Sicherungsposition SP bewegbar, wenn sich die Hinterschneidung 10 in Einschubrichtung E hinter den Sicherungselementen 7a, 7b befindet. Vorzugsweise werden die Sicherungselemente 7a, 7b, also in ihre Sicherungsposition SP bewegt bzw. in ihrer Sicherungsposition SP positioniert, wenn das Fluidleitungsendstück 3 so weit in Einschubrichtung E bewegt wurde bzw. so weit in die Schnellverbindungsvorrichtung 2 eingeschoben wurde, dass die Hinterschneidung 10 die Sicherungselemente 7a, 7b passiert hat.

Die Sicherungselemente 7a, 7b sind vorzugsweise durch Einwirkung des Fluidleitungsendstücks 3 in Einschubrichtung E auf die Auflaufschrägen 12 automatisch in Richtung ihrer Entsicherungsposition EP bewegbar. Automatisch bedeutet hierbei, dass zum Bewegen der Sicherungselemente 7a, 7b in Richtung ihrer Entsicherungsposition EP keine manuelle Betätigung der Sicherungselemente 7a, 7b durch einen nicht dargestellten Benutzer erforderlich ist.

Die Sicherungselemente 7a, 7b werden durch Entlanggleiten der Wandung des Fluidleitungsendstücks 3 und/oder der die Hinterschneidung 10 bildenden Struktur, vorzugsweise des Wulstes, an den Auflaufschrägen 12 beim Einschieben des Fluidleitungsendstücks 3 in Richtung ihrer Entsicherungsposition EP bewegt. Hierzu weisen die Auflaufschrägen 12 den Winkel α auf, der das Entlanggleiten des Fluidleitungsendstücks 3 bzw. der Hinterschneidung 10 an den Sicherungselementen 7a, 7b, insbesondere den Sicherungsabschnitten 9, ermöglicht.

Hierzu ist der Winkel α so gewählt, dass eine Selbsthemmung des Fluidleitungsendstücks 3 an den Auflaufschrägen 12 verhindert und/oder ein Einschieben des Fluidleitungsendstücks 3 in die Schnellverbindungsvorrichtung 2 ermöglicht wird.

Vorzugsweise ist also ein Sichern des Fluidleitungsendstücks 3 in der Schnellverbindungsvorrichtung 2 bzw. ein, insbesondere fluiddichtes, Anschließen des Fluidleitungsendstücks 3 an die Schnellverbindungsvorrichtung 2 durch, besonders bevorzugt ausschließliches, Einschieben des Fluidleitungsendstücks 3 in die Schnellverbindungsvorrichtung 2 in Einschubrichtung E möglich. Hierbei bedeutet "ausschließlich", dass zum Sichern des Fluidleitungsendstücks 3 gegen Entnahme außer dem Einschieben keine weitere Betätigung und/oder Bedienung der Schnellverbindungsvorrichtung 2 erforderlich ist.

Vorzugsweise ist eine manuelle Betätigung der Schnellverbindungsvorrichtung 2, insbesondere der Sicherungselemente 7a, 7b und/oder der Betätigungselemente 8, nur zum Entsichern und/oder Entnehmen des Fluidleitungsendstücks 3 erforderlich. Vorzugsweise ist die Entnahme bzw. das Entsichern des Fluidleitungsendstücks 3 nicht ohne bzw. nur durch manuelles Bewegen der Sicherungselemente 7a, 7b in ihre Entsicherungsposition EP bzw. durch manuelles, insbesondere gleichzeitiges, Positionieren der Sicherungselemente 7a, 7b in ihren Entsicherungspositionen EP, vorzugsweise durch einen in den Figuren nicht dargestellten Benutzer, möglich.

An dieser Stelle sei angemerkt, dass auch eine Ausführung der Sicherungselemente 7a, 7b bzw. der Sicherungsabschnitte 9 ohne Auflaufschrägen 12 möglich ist. In diesem Fall kann es erforderlich sein, dass die Sicherungselemente 7a, 7b durch manuelles Bewegen in ihre Entsicherungsposition EP bewegt werden und/oder in ihrer Entsicherungsposition EP positioniert werden.

Die Herstellung der fluidischen Verbindung und/oder die Sicherung des Fluidleitungsendstücks 3 gegen Entnahme ist/sind vorzugsweise optisch und/oder akustisch signalisierbar. Insbesondere sind das optische Signalisieren und das akustische Signalisieren unabhängig voneinander, jedoch besonders bevorzugt in Kombination realisierbar.

Die Sicherungselemente 7a, 7b sind in einem Aspekt dazu ausgebildet, bei Bewegung in die Sicherungsposition SP, beispielsweise durch Aufschlagen, ein akustisches Signal, insbesondere ein Klacken oder ein Klickgeräusch, zu erzeugen, um die erfolgte Sicherung des Fluidleitungsendstücks 3 gegen Entnahme bzw. das Hintergreifen der Hinterschneidung 10 mit dem/den Sicherungslement(en) 7a, 7b zu signalisieren. Vorzugsweise wird also die erfolgte Sicherung des Fluidleitungsendstücks 3 durch das akustische Signal signalisiert.

Die Sicherungselemente 7a, 7b bewegen sich automatisch in ihre Sicherungsposition SP, sobald die Hinterschneidung 10 die Sicherungselemente 7a, 7b beim Einschieben des Fluidleitungsendstücks 3 passiert hat. Die Rückstelleinrichtungen 18 bewirken dann eine schnelle Bewegung der Sicherungselemente 7a, 7b in ihre Sicherungsposition SP, sodass durch das Auftreffen der Sicherungselemente 7a, 7b auf dem Fluidleitungsendstück 3 und/oder auf einem dazu vorgesehenen Abschnitt des Gehäuses 4 das akustische Signal erzeugt wird.

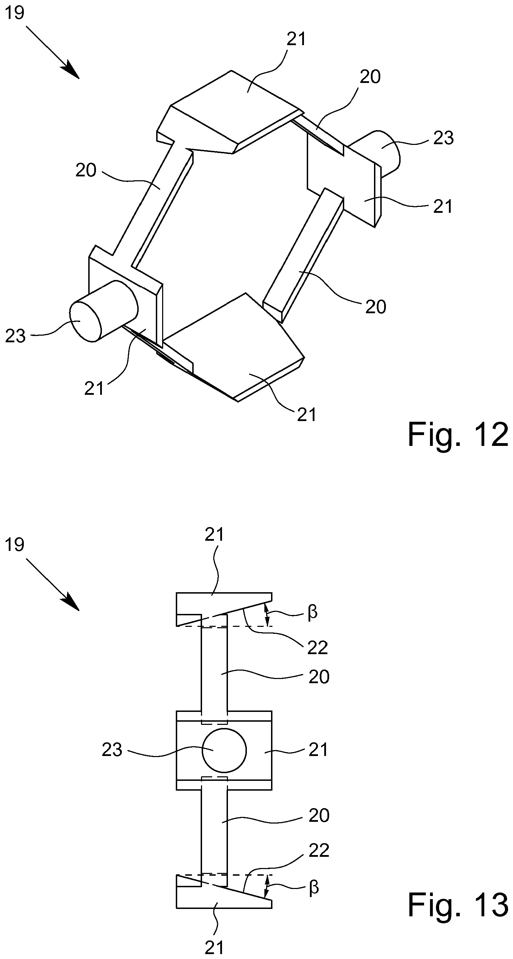

Das optische Signal wird vorzugsweise durch einen optischen Sicherungsindikator 19, wie er in Fig. 12 und 13 in verschiedenen Ansichten dargestellt ist, erzeugt. Vorzugsweise weist die Schnellverbindungsvorrichtung 2 den Sicherungsindikator 19 auf, der zumindest im Wesentlichen innerhalb des Gehäuses 4 der Schnellverbindungsvorrichtung 2 angeordnet sein kann, was auch in den Fig. 1 und 2 zu erkennen ist. Die Schnellverbindungsvorrichtung 2 ist vorzugsweise dazu ausgebildet, dass der optische Sicherungsindikator 19 das äußere Erscheinungsbild der Schnellverbindungsvorrichtung 2 ändert. Auf diese Weise kann ein Verbindungszustand der Verbindung des Fluidleitungsendstücks 3 mit der Schnellverbindungsvorrichtung 2, insbesondere also eine Fluidverbindung und/oder mechanische Sicherung, signalisiert werden.

Der Sicherungsindikator 19 weist mindestens ein Signalelement 23, vorzugsweise zwei Signalelemente 23 auf. Der Sicherungsindikator 19 ist dazu ausgebildet, sich durch Herstellung der Verbindung die Signalelemente 23 zu bewegen, wodurch der Verbindungszustand signalisiert wird. Insbesondere werden die zunächst im Gehäuse 4 versenkten Signalelemente 23 durch Herstellen der Verbindung aus dem Gehäuse 4 geschoben oder umgekehrt. Hier sind jedoch auch andere Lösungen für eine optische Signalisierung möglich.

Der Sicherungsindikator 19 ist vorzugsweise mechanisch durch das Fluidleitungsendstück 3 betätigbar. Der Sicherungsindikator 19 ist vorzugsweise in Einschubrichtung E hinter einer Dichtung, insbesondere hinter einem Dichtring 25, und/oder hinter der Verriegelungsebene V angeordnet. Hierdurch kann erreicht werden, dass das optische Signal erst dann erzeugt wird, wenn die durchgehende fluidische Verbindung hergestellt ist.

Es ist wünschenswert, aber nicht zwingend, dass die Sicherung mittels der Sicherungselemente 7a, 7b jedenfalls der vollständigen optischen Signalisierung vorausgeht oder hierfür eine Voraussetzung bildet. Es ist also möglich, dass der Sicherungsindikator 19 jedenfalls teilweise ein optisches Signal erzeugt, insbesondere ausgelegt wird oder ist, wenn die fluidische Verdingung hergestellt, das Fluidleitungsendstück 3 an der Schnellverbindungsvorrichtung 2 jedoch noch nicht gesichert ist.

Der Sicherungsindikator 19 bildet vorzugsweise eine federnde Anordnung, die derart angeordnet und ausgebildet ist, dass das Fluidleitungsendstück 3 bei Herstellung der Verbindung hierauf einwirkt, sodass das optische Signal erzeugt wird. Der Sicherungsindikator 19 wird durch das Fluidleitungsendstück 3 vorzugsweise derart verformt, dass das optische Signal erzeugt wird. Vorzugsweise ist der Sicherungsindikator federnd, sodass das optische Signal verschwindet, wenn die Verbindung getrennt wird.

Im Darstellungsbeispiel ist der Sicherungsindikator 19 einstückig ausgeführt. Vorzugsweise ist der Sicherungsindikator 19 aus einem flexiblen und/oder elastischen Material, bevorzugt einem Kunststoff, hergestellt. Der Sicherungsindikator 19 ist also bevorzugt flexibel und/oder elastisch verformbar.

Vorzugsweise ist der Sicherungsindikator 19 axial unbeweglich in dem Gehäuse 4 angeordnet. Der Sicherungsindikator 19 ist radial verformbar, wodurch die Signalisierung erfolgen kann.

Der Sicherungsindikator 19 weist im Darstellungsbeispiel einen zumindest im Wesentlichen rechteckigen und/oder oktaederförmigen Querschnitt auf. Der Sicherungsindikator 19 kann jedoch auch ringartig oder ringförmig sein. Er ist mit seiner Haupterstreckung vorzugsweise senkrecht zur Einschubrichtung E angeordnet.

Der Sicherungsindikator 19 kann mehrere, bevorzugt vier, insbesondere identisch ausgebildete und/oder symmetrisch angeordnete, Verbindungsstege 20 sowie mehrere, besonders bevorzugt vier, Funktionselemente 21 aufweisen. Die Funktionselemente 21 sind durch die Verbindungsstege 20 miteinander verbunden. Der Sicherungsindikator 19 ist durch die Funktionselemente 21 in dem Gehäuse 4 der Schnellverbindungsvorrichtung 2 gehalten.

Die Funktionselemente 21 sind vorzugsweise dazu ausgebildet, eine Bewegung und/oder Verformung des Sicherungsindikators 19, insbesondere bei Einschieben des Fluidleitungsendstücks 3 in die Schnellverbindungsvorrichtung 2, und/oder ein optisches Signal zu erzeugen. Die Funktionselemente 21 sind daher vorzugsweise unterschiedlich ausgebildet, vorzugsweise wobei je zwei diametral gegenüberliegende Funktionselemente 21 gleichartig oder identisch ausgebildet sind.

Der Sicherungsindikator 19 weist vorzugsweise eine geschlossene Grundform auf, die eine Öffnung bildet, durch die das Fluidleitungsendstück 3 schiebbar ist. Wenn das Fluidleitungsendstück 3 in die Einschubrichtung bewegt wird, verdrängt es vorzugsweise einen Abschnitt des Sicherungsindikators 19, wodurch das optische Signal erzeugt wird.

Der Sicherungsindikator 19 wird vorzugsweise durch Entlanggleiten der Wandung und/oder der Hinterschneidung 10, vorzugsweise des Wulstes, an den Auflaufschrägen 22 beim Einschieben des Fluidleitungsendstücks 3 bewegt oder verformt.

Vorzugsweise weist der Sicherungsindikator 19 eine Auflaufschräge 22 auf. Diese Auflaufschräge 22 ist so angeordnet, dass das Fluidleitungsendstück 3, wenn es zur Herstellung der Verbindung in Einschubrichtung E bewegt wird, den Sicherungsindikator 19 bewegt oder verformt.

Das Signalelement 23 ist vorzugsweise durch Bewegung aus dem Gehäuse 4 oder in das Gehäuse 4 dazu geeignet, einen Zustand der Verbindung zu signalisieren. Durch die Bewegung ändert sich das Aussehen der Schnellverbindungsvorrichtung 2, wodurch der Verbindungszustand signalisiert wird. Das Signalelement 23 ist vorzugsweise unmittelbar durch das Fluidleitungsendstück 3 bewegbar, um das optische Signal zu erzeugen. Das Signalelement 23 kann zylindrisch, kuppelförmig und/oder in Form eines Nippels, Stifts oder Pins gebildet sein.

Im Darstellungsbeispiel weisen zwei einander gegenüberliegende Funktionselemente 21 jeweils eine Auflaufschräge 22 und/oder ein Signalelement 23 auf. Das Signalelement 23 ist radial außen an dem Funktionselement 21 angeordnet. Die Auflaufschräge 22 ist radial innen an dem Funktionselement 21 angeordnet. Auf diese Weise kann mittels der Auflaufschräge 22 das Signalelement 23 in eine radial nach außen gewandte Richtung bewegt werden, wodurch es über das Gehäuse 4 oder aus dem Gehäuse 4 ragt und hierdurch das optische Signal bewirkt oder erzeugt.

Das oder die Signalelemente 23 können jedoch alternativ oder zusätzlich auch an anderen Stellen des Sicherungsindikators 19 vorgesehen sein. Sie können auch eine andere Bewegung vollziehen, um den Verbindungszustand zu signalisieren. Sie können insbesondere an den Funktionselementen 21 angeordnet sein, die zwischen den Funktionselementen 21, die die Auflaufschrägen 22 aufweisen, angeordnet sind. Hierbei können die Signalelemente 23 bei Herstellung der Verbindung nach radial innen bewegt werden.

Die Auflaufschrägen 22 sind im Darstellungsbeispiel derart angeordnet, dass sie eine lichte Weite in Einschubrichtung E verjüngen und/oder dass der Abstand zwischen den einander zugewandten Seiten der Funktionselemente 21, die die Auflaufschrägen 22 aufweisen, durch die Auflaufschrägen 22 in Einschubrichtung E verringert wird.

Die Auflaufschrägen 22 sind vorzugsweise dazu ausgebildet, durch Einschieben des Fluidleitungsendstücks 3 an diesem abzugleiten. Der Winkel β, den die Auflaufschräge 22 mit der Einschubrichtung E einschließt, beträgt vorzugsweise weniger als 40°, vorzugsweise weniger als 30°, und/oder mehr als 10°, bevorzugt mehr als 20°.

Die Signalelemente 23 sind vorzugsweise in dazu vorgesehenen Öffnungen, Durchbrechungen oder Bohrungen des Gehäuses 4 angeordnet und/oder bewegbar, was beispielhaft in Fig. 1 zu erkennen ist. Die Signalelemente 23 können durch das Fluidleitungsendstück 3 aus dem Gehäuse 4 getrieben oder in das Gehäuse 4 gezogen werden. Hierdurch ändert sich das Aussehen der Schnellverbindungsvorrichtung 2, was die optische Signalisierung bewirkt.

Der Sicherungsindikator 19 umgibt das Fluidleitungsendstück 3 vollständig bzw. der Sicherungsindikator 19 bildet also eine Öffnung, in die das Fluidleitungsendstück 3 eintreten oder durch die das Fluidleitungsendstück 3 hindurchtreten kann. Hierbei ist der Sicherungsindikator 19 verformbar, wodurch das mindestens eine Signalelement 23 ausgelenkt wird, bevorzugt radial in Bezug auf die Einschubrichtung E bzw. Längsachse L.

Der Sicherungsindikator 19 ist vorzugsweise derart verformbar, dass bei einer Vergrößerung des Abstandes zwischen zwei auf gegenüberliegenden Seiten des Sicherungsindikators 19 entlang einer ersten gedachten Achse angeordneten Funktionselementen 21 - beispielsweise mittels der Auflaufschrägen 22 - der Abstand zwischen zwei anderen, auf entlang einer zweiten gedachten, quer oder senkrecht zu der ersten Achse verlaufenden zweiten Achse und ebenfalls auf gegenüberliegenden Seiten des Sicherungsindikators 19 angeordneten Funktionselementen 21, vergrößert wird und/oder umgekehrt.

Bei einer erfolgten Sicherung des Fluidleitungsendstücks 3 ist es möglich, dass die Signalelemente 23 radial zur Einschubrichtung E so weit innen angeordnet sind, dass sie für einen (nicht dargestellten) Bediener oder Benutzer der Schnellverbindungsvorrichtung 2 oder des Schnellverbindungssystems 1 von außen in dem Gehäuse 4 nicht sichtbar sind. Das optische Signalisieren der Sicherung des Fluidleitungsendstücks 3 erfolgt in diesem Fall also durch eine Unsichtbarkeit der Signalelemente 23 für den Bediener oder Benutzer. Mit anderen Worten ändert sich durch Herstellung der Verbindung das äußere Erscheinungsbild der Schnellverbindungsvorrichtung 2.

Es ist jedoch auch das Gegenteil möglich, wobei das optische Signalisieren der Sicherung des Fluidleitungsendstücks 3 durch eine Sichtbarkeit der Signalelemente 23 für den Bediener oder Benutzer erfolgt. Auch hier ändert sich das äußere Erscheinungsbild der Schnellverbindungsvorrichtung 2 durch Herstellung der Verbindung. In diesem Fall werden die Signalelemente 23 radial zur Einschubrichtung E soweit bewegt, dass sie für einen Bediener oder Benutzer der Schnellverbindungsvorrichtung 2 oder des Schnellverbindungssystems 1 von außen in oder an dem Gehäuse 4 sichtbar sind.

Die erste Variante, also Signalisieren der Sicherung durch Unsichtbarkeit der Signalelemente 23, kann durch einen Signalindikator 19 realisiert werden, der gemäß den Fig. 12 und 13 ausgebildet ist. Insbesondere weist bei dieser Ausführungsform jedes Funktionselement 21 entweder eine Auflaufschräge 22 oder ein Signalelement 23 auf, wobei die Signalelemente 23 und/oder die Auflaufschrägen 22 jeweils an einander gegenüberliegenden Funktionselementen 21 angeordnet sind.

Zur Realisierung der zweiten Variante, bei der das Signalisieren der erfolgten Sicherung des Fluidleitungsendstücks 3 durch eine Sichtbarkeit der Signalelemente 23 erfolgt, ist es vorteilhaft, dass an zwei Funktionselementen 21 jeweils sowohl eine Auflaufschräge 22 als auch ein Signalelement 23 angeordnet sind. In diesem Fall weisen die zwei weiteren Funktionselemente 21 weder eine Auflaufschräge 22 noch ein Signalelement 23 auf. Es ist bei der zweiten Variante auch möglich, dass der Sicherungsindikator 19 nur zwei Funktionselemente 21 aufweist, vorzugsweise wobei jedes der Funktionselemente 21 eine Auflaufschräge 22 und ein Signalelement 23 aufweist.

Die Signalelemente 23 sind - beispielsweise durch die Verbindungsstege 20 -radial nach innen oder außen vorgespannt. Dies ermöglicht es, durch die Herstellung der Verbindung auf die Signalelemente 23 entgegen der Vorspannung einzuwirken, sodass sich das äußere Erscheinungsbild der Schnellverbindungsvorrichtung 2 ändert.

Vorzugsweise ist die Schnellverbindungsvorrichtung 2 zum fluiddichten Anschließen des Fluidleitungsendstücks 3 ausgebildet. Hierdurch kann eine zur Umgebung dichte, ununterbrochene Passage wie ein Kanal gebildet werden.

Die Schnellverbindungsvorrichtung 2 weist dazu vorzugsweise eine Dichteinrichtung 24 zum fluiddichten Anschließen des Fluidleitungsendstücks 3 auf. Die Dichteinrichtung 24 ist insbesondere in den Fig. 2, 3 und 4 zu erkennen.

Die Dichteinrichtung 24 ist dazu ausgebildet, das Fluidleitungsendstück 3 an einen durch die Schnellverbindungsvorrichtung 2 gebildeten Kanal derart anzuschließen, dass eine durchgehende, ununterbrochene Fluidverbindung hergestellt wird. Hierzu kann die Dichteinrichtung 24 das Fluidleitungsendstück 3 von innen und/oder außen vollumfänglich dicht anbinden.

Die Dichteinrichtung 24 ist im Darstellungsbeispiel innerhalb des Gehäuses 4 angeordnet. Die Dichteinrichtung 24 kann zwischen dem Fluidleitungsendstück 3 und dem Gehäuse 4 angeordnet sein. Ferner kann die Dichteinrichtung 24 zum fluiddichten Verschließen von Zwischenräumen zwischen dem Fluidleitungsendstück 3 und dem Gehäuse 4 ausgebildet sein.

Die Dichteinrichtung 24 weist vorzugsweise einen oder zwei Dichtringe 25 und/oder eine Distanzhülse 26 auf oder ist hierdurch gebildet. Die Dichtringe 25 und/oder die Distanzhülse 26 sind ringartig ausgebildet. Die Dichteinrichtung 24 bildet vorzugsweise eine Öffnung, in die das Fluidleitungsendstück 3 einsetzbar ist, wodurch eine Wand des Fluidleitungsendstücks 3 gegenüber der Schnellverbindungsvorrichtung 2 abgedichtet wird.

In der in den Figuren gezeigten Ausführungsform umfassen die Dichtringe 25 und die Distanzhülse 26 das Fluidleitungsendstück 3 bei und/oder nach erfolgter Sicherung gegen Entnahme. Hier sind jedoch auch andere konstruktive Lösungen möglich, z. B. einer Anordnung der Dichteinrichtung 24 bzw. des Dichtrings 25 am axialen Ende des Fluidleitungsendstücks 3. In diesem Fall entspricht der Radius des Dichtrings 25 vorzugsweise dem Radius des Fluidleitungsendstücks 3.

Die vorliegende Erfindung betrifft ferner ein Verfahren zur Herstellung der Schnellverbindungsvorrichtung 2 mit folgenden Schritten, die vorzugsweise in der angegebenen Reihenfolge durchgeführt werden, wobei aber auch eine andere Reihenfolge möglich ist
- Zusammensetzen der Sicherungselemente 7a, 7b, vorzugsweise so dass die Führungsabschnitte 11 der Sicherungselemente 7a, 7b aneinander geführt sind, und/oder dass der Sicherungsabschnitt 9 eines der Sicherungselemente 7a, 7b, vorzugsweise innenseitig, an Führungsabschnitten 11 des anderen der Sicherungselemente 7a, 7b anliegt.
- Anordnen der zusammengesetzten Sicherungselemente 7a, 7b durch Einführen durch die Betätigungsöffnung 17 des Gehäuses 4 hindurch. Insbesondere erfolgt das Einführen der Sicherungselemente 7a, 7b quer, besonders bevorzugt senkrecht, zur Einschubrichtung E.
- Anordnen der zusammengesetzten Sicherungselemente 7a, 7b zumindest im Wesentlichen innerhalb des Gehäuses 4.
- Anordnen mindestens eines Betätigungselements 8 in der Betätigungsöffnung 17 des Gehäuses 4 vor oder nachdem die Sicherungselemente 7a, 7b in das Gehäuse eingeführt worden sind. Hierbei kann das Betätigungselement 8 bereits mit dem korrespondierenden Sicherungselement 7a, 7b verbunden sein oder verbunden werden.
- Sichern der zusammengesetzten Sicherungselemente 7a, 7b gegen Entnahme aus dem Gehäuse 4, vorzugsweise durch Verbinden mindestens eines Betätigungselements 8 mit dem korrespondierenden Sicherungselement 7a, 7b - besonders bevorzugt durch Verbinden des zweiten Betätigungselements 8 mit dem anderen der Sicherungselemente 7a, 7b - insbesondere durch Zusammendrücken, Einhaken, Anklipsen oder allgemein durch Herstellung einer form- und/oder kraft- und/oder stoffschlüssigen Verbindung.

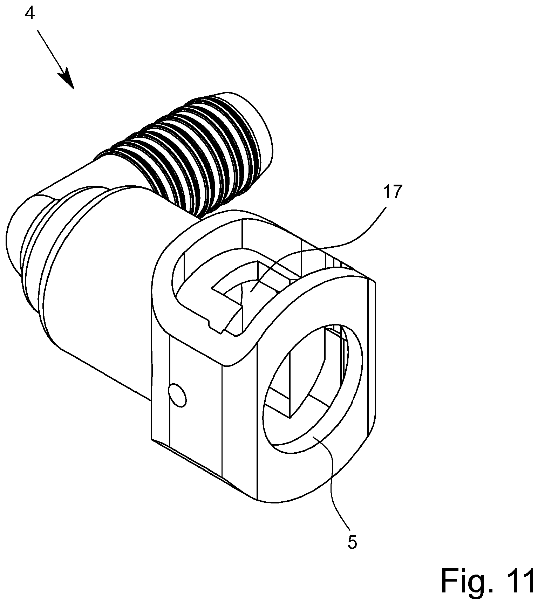

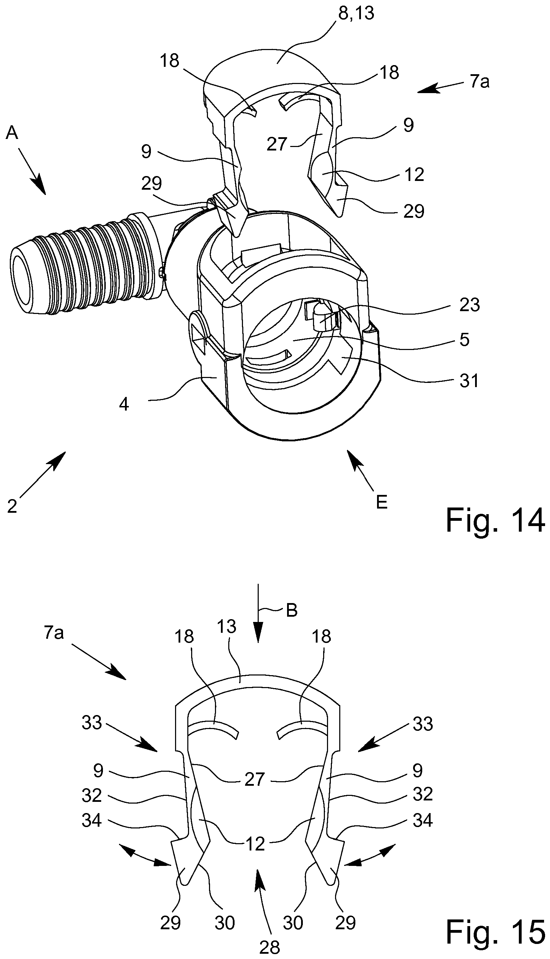

Voranstehend wurde die vorliegende Erfindung anhand der in den Figuren 1 bis 13 dargestellten ersten Ausführungsform erläutert. Im Folgenden wird insbesondere auf eine in den Figuren 14 bis 17 dargestellte, besonders bevorzugte zweite Ausführungsform der vorliegenden Erfindung eingegangen.

Fig. 14 zeigt die zweite Ausführungsform des Schnellverbindungssystems 1 bzw. der Schnellverbindungsvorrichtung 2 in einer Explosionsdarstellung.

Im Gegensatz zu der ersten Ausführungsform weist die Schnellverbindungsvorrichtung 2 gemäß der zweiten Ausführungsform nur ein bzw. genau ein Sicherungselement 7a auf. Entsprechend ist das Gehäuse 4 der Schnellverbindungsvorrichtung 2 zur Aufnahme (genau) eines Sicherungselementes 7a ausgebildet.

Vorzugsweise ist die Funktionsweise bzw. das Funktionsprinzip zur Sicherung des Fluidleitungsendstücks 3 in der Schnellverbindungsvorrichtung 2 bei der zweiten Ausführungsform ähnlich oder identisch zur ersten Ausführungsform. Dementsprechend gelten die voranstehenden Erläuterungen vorzugsweise auch für die zweite Ausführungsform, sofern dies nicht offensichtlich widersprüchlich ist. Insbesondere sind Merkmale, die zuvor im Zusammenhang mit den zwei Sicherungselementen der ersten Ausführungsform beschrieben werden, auch Merkmale der zweiten Ausführungsform mit nur einem Sicherungselement 7a.

Fig. 15 zeigt das Sicherungselement 7a in einer Vorderansicht, wobei die Blickrichtung der insbesondere in Fig. 15 angedeuteten Einschubrichtung E entspricht.

Vorzugsweise weist das Sicherungselement 7a zwei Sicherungsabschnitte 9 auf. Die Sicherungsabschnitte 9 sind insbesondere einstückig mit dem Sicherungselement 7a ausgebildet.

Insbesondere sind die Sicherungsabschnitte 9 des Sicherungselements 7a einander gegenüberliegend angeordnet.

In Fig. 15 ist das Sicherungselement 7a in seiner Sicherungsposition SP dargestellt. Das Fluidleitungsendstück ist in der Schnellverbindungsvorrichtung 2 gesichert bzw. nicht aus der Schnellverbindungsvorrichtung 2 entnehmbar, wenn sich das Sicherungselement 7a in der Sicherungsposition SP befindet. Das Sicherungselement 7a ist dazu ausgebildet, in der Sicherungsposition mit den Sicherungsabschnitten 9 die Hinterschneidung 10 des Fluidleitungsendstücks 3 zu hintergreifen.

Vorzugsweise ist das Sicherungselement 7a flexibel und/oder elastisch verformbar ausgebildet. Besonders bevorzugt sind die Sicherungsabschnitte 9 flexibel und/oder elastisch verformbar ausgebildet. Insbesondere können die Sicherungsabschnitte 9 auseinander bewegt, gespreizt oder verbogen werden, wie in Fig. 15 auch durch Pfeile angedeutet ist. Hierdurch wird die Entsicherungsposition EP erreicht. Das Sicherungselement 7a bzw. die Sicherungsabschnitte 9 ist/sind vorzugsweise elastisch verformbar, so dass das Sicherungselement 7a bzw. die Sicherungsabschnitte 9 nach einer Verformung oder Auseinanderbewegung automatisch in die in den Figuren 14 und 15 dargestellte Form bzw. Sicherungsposition SP zurückkehrt/zurücckehren.

Die Position bzw. Stellung, in der die Sicherungsabschnitte 9 auseinander bewegt bzw. gespreizt sind, ist die Entsicherungsposition EP des Sicherungselements 7a. Vorzugsweise ist das Fluidleitungsendstück 3 entsichert bzw. aus der Schnellverbindungsvorrichtung 2 entnehmbar, wenn sich das Sicherungselement 7a in der Entsicherungsposition EP befindet. Die Entsicherungsposition EP ist in den Figuren nicht explizit dargestellt, aber in Fig. 15 durch Pfeile, die die Bewegung der Sicherungsabschnitte 9 zwischen Sicherungsposition SP und Entsicherungsposition EP symbolisieren, angedeutet.

Die Sicherungsabschnitte 9 sind vorzugsweise durch Einführen des Fluidleitungsendstück 3 in die Schnellverbindungsvorrichtung 2 durch Verdrängen in die Entsicherungsposition EP bewegbar.

Das Sicherungselement 7a ist vorzugsweise derart federnd ausgebildet, dass die Sicherungsabschnitte 9 mittels der durch das Sicherungselement 7a bewirkten Federkraft in der Sicherungsposition SP gehalten oder in die Sicherungsposition SP zurückführbar sind. Ferner ist bevorzugt, dass die Sicherungsabschnitte 9, insbesondere durch Einführen des Fluidleitungsendstücks 3, aus der Sicherungsposition SP in die Entsicherungsposition EP bewegbar sind, wobei durch Verformung des Sicherungselement 7a eine Federkraft aufgebaut wird, die die Sicherungsabschnitte 9 in Richtung der Sicherungsposition SP vorspannt. Hierdurch kann bewirkt werden, dass die Sicherungsabschnitte 9 ausgehend von der Entsicherungsposition EP in die Hinterschneidung 10 durch die Federkraft bewirkt automatisch eingreifen, wodurch zwischen der Schnellverbindungsvorrichtung 2 und dem Fluidleitungsendstück 3 eine Schnapp- bzw. Rastverbindung erzeugt werden kann.

Das Sicherungselement 7a ist vorzugsweise (spiegel-)symmetrisch bzw. achsensymmetrisch ausgebildet, wie insbesondere aus Fig. 15 ersichtlich ist.

Das Sicherungselement 7a ist vorzugsweise einstückig mit oder aus den (beiden) Sicherungsabschnitten 9 und dem Betätigungselement 8 bzw. Betätigungsabschnitt 13 gebildet. Da das Betätigungselement 8 bei der zweiten Ausführungsform vorzugsweise kein separates Element bzw. Bauteil bildet, wird im Folgenden lediglich von einem Betätigungsabschnitt 13 gesprochen. Es ist jedoch auch bei der zweiten Ausführungsform möglich, dass das Betätigungselement 8 bzw. der Betätigungsabschnitt 13 analog zur ersten Ausführungsform durch ein separates Bauteil oder Element gebildet ist.

Der Betätigungsabschnitt 13 ist vorzugsweise an die Form bzw. Kontur des Gehäuses 4 angepasst. Im Darstellungsbeispiel ist die Oberfläche des Betätigungsabschnitts 13 vorzugsweise zylindrisch ausgebildet oder bildet einen Abschnitt der Mantelfläche eines Zylinders. Hier sind jedoch auch beliebige andere Formen möglich.

Vorzugsweise sind die Sicherungsabschnitte 9 einstückig an dem Betätigungsabschnitt 13 angeformt. Der Betätigungsabschnitt 13 verläuft vorzugsweise quer und/oder zwischen den Sicherungsabschnitten 9, insbesondere so dass das Sicherungselement 7 bzw. die Sicherungsabschnitte 9 und der Betätigungsabschnitt 13 eine zumindest im Wesentlichen U-artige Form bildet/bilden. Mit anderen Worten bildet das Sicherungselement 7a eine halboffene bzw. einseitig offene oder nicht vollständig geschlossene Struktur.

Der Betätigungsabschnitt 13 ist vorzugsweise endseitig an den Sicherungsabschnitten 9 angeordnet und umgekehrt.

Die Sicherungsabschnitte 9 weisen vorzugsweise (jeweils) eine Auflaufschräge 12 auf. Vorzugsweise weist also das Sicherungselement 7a gemäß der zweiten Ausführungsform zwei Auflaufschrägen 12 auf, die insbesondere einander gegenüberliegend und/oder auf gegenüberliegenden Seiten der Einschubrichtung E angeordnet sind.

Vorzugsweise ist durch die Auflaufschrägen 12 eine Kontaktfläche oder Anlagefläche für das Fluidleitungsendstück 3 beim Einschieben in die Schnellverbindungsvorrichtung 2 gebildet.

Vorzugsweise bilden die Auflaufschrägen 12 zumindest im Wesentlichen konische Flächen. Vorzugsweise sind die Auflaufschrägen 12 derart ausgebildet, dass die Auflaufschrägen 12 jeweils einen Abschnitt einer Mantelfläche eines gedachten, sich in Einschubrichtung verjüngenden Kegels bilden, zumindest in der in den Figuren 14 und 15 dargestellten Sicherungsposition SP des Sicherungselements 7a. Der größte Radius des Kegels entspricht oder überschreitet hierbei vorzugsweise den Außenradius einer offenen Stirnseite des Fluidleitungsendstücks 3.

Durch die Auflaufschrägen 12 ist vorzugsweise die der Durchführung 5 zugewandte bzw. "vordere" Fläche der Sicherungsabschnitte 9 bzw. des Sicherungselements 7a größer als die der Durchführung 5 abgewandte bzw. "hintere" Fläche der Sicherungsabschnitte 9 bzw. des Sicherungselements 7a. Die "hintere" Fläche dient somit zur Verriegelung bzw. Sicherung des Fluidleitungsendstücks durch Hintergreifen der Hinterschneidung 10.

Zwischen den Sicherungsabschnitten 9 ist vorzugsweise ein Öffnungsbereich 28 gebildet. Der Öffnungsbereich 28 wird vorzugsweise seitlich durch die Sicherungsabschnitte 9 begrenzt. Diese begrenzen vorzugsweise eine lichte Weite, die den Außenradius einer offenen Stirnseite des Fluidleitungsendstücks 3 unterschreitet.

Vorzugsweise ist die Größe oder Fläche des Öffnungsbereichs 28 (reversibel) veränderbar.

Die Innenseiten 27 der Sicherungsabschnitte 9 verlaufen - zumindest in einem ersten Bereich - vorzugsweise schräg, insbesondere in einem spitzen Winkel, zu der Bewegungsrichtung B. Auf diese Weise ist zwischen den Sicherungsabschnitten 9 der sich insbesondere verengende Öffnungsbereich 28 gebildet. Vorzugsweise verringert sich mit zunehmendem Abstand von dem Betätigungsabschnitt 13 der Abstand der Innenseiten 27 voneinander, zumindest in einem ersten Bereich.

Die Innenseite 27 des Sicherungselements 7a bzw. der Sicherungsabschnitte 9 ist insbesondere diejenige Seite des Sicherungselements 7a bzw. der Sicherungsabschnitte 9, die einem in der Schnellverbindungsvorrichtung 2 gesicherten Fluidleitungsendstück 3 zugewandt ist.

Eine Außenseite 32 des Sicherungselements 7a bzw. der Sicherungsabschnitte 9 ist diejenige Seite des Sicherungselements 7a bzw. der Sicherungsabschnitte 9, die einem in der Schnellverbindungsvorrichtung 2 gesicherten Fluidleitungsendstück 3 abgewandt ist.

Der Winkel, den die Innenseiten 27 einschließen, ist vorzugsweise so gewählt, dass bei einer Betätigung des Sicherungselements 7a bzw. einer Bewegung des Sicherungselements 7a in die Bewegungsrichtung B durch die seitliche Bewegung der Sicherungsabschnitte 9 der Öffnungsbereich 28 so groß wird, dass das Fluidleitungsendstück 3 freigegeben wird bzw. aus der Schnellverbindungsvorrichtung 2 entnehmbar ist.

Durch die schräg verlaufenden Innenseiten 27 bzw. durch den verengten Öffnungsbereich 28 ist das Sicherungselement 7a dazu ausgebildet, dass beim Einschieben des Fluidleitungsendstücks 3 in die Schnellverbindungsvorrichtung 2 die Hinterschneidung 10, insbesondere der Wulst, auf die Auflaufschrägen 12 trifft bzw. die Auflaufschrägen 12 kontaktiert.

Bei einer weiteren Bewegung des Fluidleitungsendstücks 3 in die Einschubrichtung E werden die Sicherungsabschnitte 9 durch die Hinterschneidung 10 nach außen bewegt bzw. verbogen, vorzugsweise wobei die Hinterschneidung 10 an den Auflaufschrägen 12 entlanggleitet, so dass sich der Öffnungsbereich 28 bzw. der Abstand zwischen den Sicherungsabschnitten 9 vergrößert, bis die Hinterschneidung 10 die Sicherungsabschnitte 9 bzw. das Sicherungselement 7a (vollständig) passiert hat. Vorzugsweise sind die Sicherungsabschnitte 9 bzw. das Sicherungselement 7a derart elastisch verformbar ausgebildet, dass sie sich nach einem Passieren der Hinterschneidung 10 automatisch bzw. selbsttätig in die Sicherungsposition SP (zurück) bewegen. Hierdurch kann eine Schnappverbindung unter Erzeugung eines Geräuschs zur Bestätigung des Erreichens der Sicherungsposition SP erreicht werden.

Durch Betätigung des Betätigungsabschnitts 13 des Sicherungselements 7a sind die Sicherungsabschnitte 9 vorzugsweise von der Sicherungsposition SP in die Entsicherungsposition EP bewegbar, sodass ein Trennen der Schnellverbindungsvorrichtung 2 vom Fluidleitungsendstück 3 ermöglicht ist. Hierzu kann die Schnellverbindungsvorrichtung 2 eine Führung bzw. Mimik aufweisen, die bei Betätigung des Sicherungselements 7a eine Bewegung der Sicherungsabschnitte 9 in die Entsicherungsposition EP bewirkt. Insbesondere werden hierzu die Sicherungsabschnitte 9 endseitig derart geführt, dass bei Betätigung des Betätigungsabschnitts 13 die Sicherungsabschnitte 9 endseitig auseinandergeführt werden, was unter Verformung des Sicherungselements 7a zu einer Lage der Sicherungsabschnitte 9 führt, in der das Fluidleitungsendstück 3 freigegeben oder aus der Schnellverbindungsvorrichtung 2 entnehmbar ist.

Alternativ oder zusätzlich sind Enden der Sicherungsabschnitte 9 bzw. die offenen Enden des Sicherungselements 7a zum rastenden Halten des Sicherungselements 7a in der Schnellverbindungsvorrichtung 2 ausgebildet, so dass das Sicherungselement 7a durch Einsetzen in die Schnellverbindungsvorrichtung 2 formschlüssig gehalten ist.

Vorzugsweise weisen die Sicherungsabschnitte 9 jeweils eine Gleitfläche 30 auf. Die Gleitfläche 30 ist vorzugsweise in einem zweiten Bereich bzw. an einem freien Ende 29 der Sicherungsabschnitte 9 angeordnet.

Der erste Bereich eines Sicherungsabschnittes 9 schließt sich vorzugsweise (unmittelbar) an den Betätigungsabschnitt 13 an. Der zweite Bereich bzw. das freie Ende 29 eines Sicherungsabschnittes 9 schließt sich vorzugsweise (unmittelbar) an den ersten Bereich an. Der zweite Bereich bzw. das freie Ende 29 ist vorzugsweise auf der dem Betätigungsabschnitt 13 abgewandten Seite des Sicherungsabschnitts 9 angeordnet.

Die Innenflächen 27 des ersten Bereichs und die Gleitflächen 30 des zweiten Bereichs bzw. des freien Endes 29 schließen vorzugsweise einen stumpfen Winkel ein oder bilden diesen. Vorzugsweise vergrößert sich also mit zunehmendem Abstand von dem ersten Bereich der Abstand der Gleitflächen 30 voneinander.

Vorzugsweise weisen die Sicherungsabschnitte 9 zumindest im Wesentlichen die Form eines stumpfwinkligen Dreiecks auf, dessen Ecke mit dem stumpfen Winkel in den Öffnungsbereich 28 hineinragt bzw. diesen verengt.

Vorzugsweise sind die Gleitflächen 30 dazu ausgebildet, bei Bewegung des Sicherungselements 7a in die Bewegungsrichtung B ein Auseinanderbewegen oder Spreizen der Sicherungsabschnitte 9 zu bewirken. Dies dient insbesondere dazu, dass ein in der Schnellverbindungsvorrichtung 2 gesichertes Fluidleitungsendstück 3 auf einfache Weise wieder entsichert bzw. freigegeben werden kann.

Vorzugsweise ist das Sicherungselement 7a bzw. die Schnellverbindungsvorrichtung 2 dazu ausgebildet, dass durch Drücken bzw. Herunterdrücken des Sicherungselements 7a bzw. Betätigungsabschnitts 13 in Bewegungsrichtung B das Fluidleitungsendstück 3 entsicherbar bzw. für die Entnahme freigebbar ist. Vorzugsweise bewirkt ein Herunterdrücken bzw. Eindrücken des Sicherungselements 7a ein Auseinanderbewegen oder Spreizen der Sicherungsabschnitte 9, so dass der in der Sicherungsposition SP verengte Öffnungsbereich 28 vergrößert wird und eine Entnahme des Fluidleitungsendstück 3 ermöglicht ist. Hierdurch kann das Sicherungselement 7a entgegen der Bewegungsrichtung B und/oder in die Sicherungsposition SP vorgespannt werden.

Durch das Herunterdrücken des Sicherungselements 7a in die Bewegungsrichtung B wird vorzugsweise durch das (elastische) Verformen bzw. Spreizen der Sicherungsabschnitte 9 eine Rückstellkraft in dem Sicherungselement 7a bzw. den Sicherungsabschnitten 9 erzeugt, die der Bewegungsrichtung B entgegengerichtet ist und/oder - sofern keine Kraft auf das Sicherungselement 7a in Bewegungsrichtung wirkt - das Sicherungselement 7a entgegen der Bewegungsrichtung B verschiebt und/oder eine Bewegung des Sicherungselements 7a bzw. der Sicherungsabschnitte 9 in die Sicherungsposition SP bewirkt.

Das Sicherungselement 7a ist vorzugsweise sowohl durch Einwirkung des Fluidleitungsendstücks 3 beim Einschieben in die Schnellverbindungsvorrichtung 2 als auch durch Herunterdrücken des Sicherungselements 7a durch einen (nicht dargestellten) Benutzer von der Sicherungsposition SP in die Entsicherungsposition EP bewegbar, vorzugsweise wobei die Sicherungsabschnitte 9 auseinanderbewegt, gespreizt oder verbogen werden.

Vorzugsweise sind die freien Enden 29 jeweils in einer zugeordneten Aufnahme 31 des Gehäuses 4 angeordnet. Das Gehäuse 4 weist vorzugsweise zwei, insbesondere symmetrisch angeordnete, Aufnahmen 31 für die freien Enden 29 der Sicherungsabschnitte 9 auf. Die Aufnahmen 31 weisen vorzugsweise eine Gegenfläche für die Gleitfläche 30 auf oder bilden diese.

Die Aufnahmen 31 bilden vorzugsweise einen Freiraum für die freien Enden 29, durch den diese bei Bewegung in die Bewegungsrichtung B durchtauchen können.

Die Aufnahmen 31 bilden bevorzugt (jeweils) einen Durchbruch des Gehäuses 4.

Vorzugsweise gleiten die Gleitflächen 30 bei einem Herunterdrücken des Sicherungselements 7a entlang der Bewegungsrichtung B an den zugeordneten Gegenflächen der Aufnahmen 31 entlang, so dass durch die Bewegung des Sicherungselements 7a in die Bewegungsrichtung B die Sicherungsabschnitte 9 nach außen in Richtung der Entsicherungsposition EP bzw. in die Entsicherungsposition EP bewegt, gespreizt oder verbogen werden.

Das Sicherungselement 7a, insbesondere die Sicherungsabschnitte 9, weist bzw. weisen an der Außenseite 32 vorzugsweise eine Aussparung 33 auf. Insbesondere ist durch die Aussparung 33 eine Bewegung der Sicherungsabschnitte 9 nach außen bzw. in die Entsicherungsposition EP ermöglicht. Durch die Aussparung 33 ist insbesondere vermieden, dass die Sicherungsabschnitte 9 mit der Außenseite 32 an der Innenseite des Gehäuses 4 zur Anlage kommen und somit eine weitere Bewegung der Sicherungsabschnitte 9 nach außen blockiert wird, bevor der Abstand zwischen den Sicherungsabschnitten 9 groß genug ist, um ein Hindurchschieben des Fluidleitungsendstücks zu erlauben. Des Weiteren ist durch die Aussparung 33 eine platzsparende und/oder materialsparende Konstruktion bzw. Fertigung ermöglicht.

Vorzugsweise weist das Sicherungselement 7a bzw. weisen die Sicherungsabschnitte 9 auf der Außenseite 32 eine Schulter 34 auf oder bilden diese. Die Schulter 34 ist vorzugsweise zur Sicherung des Sicherungselements 7a gegen ein Herausfallen oder eine Entnahme aus dem Gehäuse 4 ausgebildet.

Die Schulter bildet vorzugsweise eine quer zur Bewegungsrichtung B verlaufende Fläche oder weist diese auf.

Die Schulter 34 bildet vorzugsweise einen unteren Abschnitt oder eine untere Begrenzung der Aussparung 33.

Vorzugsweise ist die Schulter 34 zu einem formschlüssigen Sichern des Sicherungselements 7a in dem Gehäuse 4 bzw. der Aufnahme 31 ausgebildet.

Das freie Ende 29 ist vorzugsweise zumindest im Wesentlichen V-artig oder dreieckig ausgebildet.

Das Sicherungselement 7a weist vorzugsweise eine oder mehrere, insbesondere einstückig mit dem Sicherungselement 7a ausgebildete oder einstückig angeformte, Rückstelleinrichtungen 18 auf. Die Rückstelleinrichtung(en) 18 sind insbesondere zur, bevorzugt automatischen bzw. selbsttätigen, Bewegung des Sicherungselements 7a in die Sicherungsposition SP ausgebildet. Sie können beispielsweise durh eine oder mehrere Federn, insbesondere Federarme, gebildet sein.

Vorzugsweise liegen die Rückstelleinrichtungen 18 an einem in der Schnellverbindungsvorrichtung 2 gesicherten Fluidleitungsendstück 3 an oder berühren dieses.

Die Rückstelleinrichtungen 18 sind vorzugsweise flexibel und/oder elastisch verformbar. Vorzugsweise sind die Rückstelleinrichtungen 18 dazu ausgebildet, das Sicherungselement 7a in die Sicherungsposition SP zu bewegen bzw. in der Sicherungsposition SP zu halten, wenn keine Kraft auf das Sicherungselement 7a bzw. den Betätigungsabschnitt 13 in Bewegungsrichtung B wirkt. Dies ist einer zuverlässigen Sicherung des Fluidleitungsendstücks 3 zuträglich.

Im Darstellungsbeispiel gemäß Fig. 14 und 15 weist das Sicherungselement 7a zwei Rückstelleinrichtungen 18 auf, die durch zwei, insbesondere symmetrisch angeordnete, gekrümmte bzw. entgegen der Betätigungsrichtung B vorgespannte Federnocken gebildet sind. Durch die Krümmung bzw. Vorspannung kann eine stärkere Rückstellkraft erreicht bzw. Spiel vermieden werden. Hier sind jedoch auch andere Lösungen möglich, insbesondere auch entsprechend der in den Fig. 9 und 10 dargestellten Ausführungsform bzw. in Form von (nicht gekrümmten bzw. geraden) Blattfedern.

Vorzugsweise weist die Schnellverbindungsvorrichtung 2 einen Sicherungsindikator 19 auf. Bei der zweiten Ausführungsform weist der Sicherungsindikator 19 vorzugsweise zwei, vorzugsweise separate bzw. baulich getrennte, Signalelemente 23 auf oder ist durch diese gebildet. Die Signalelemente 23 des Sicherungsindikators 19 sind vorzugsweise gleichartig, identisch und/oder symmetrisch zueinander ausgebildet.

Die Signalelemente 23 sind vorzugsweise unabhängig voneinander bewegbar und/oder ungekoppelt.

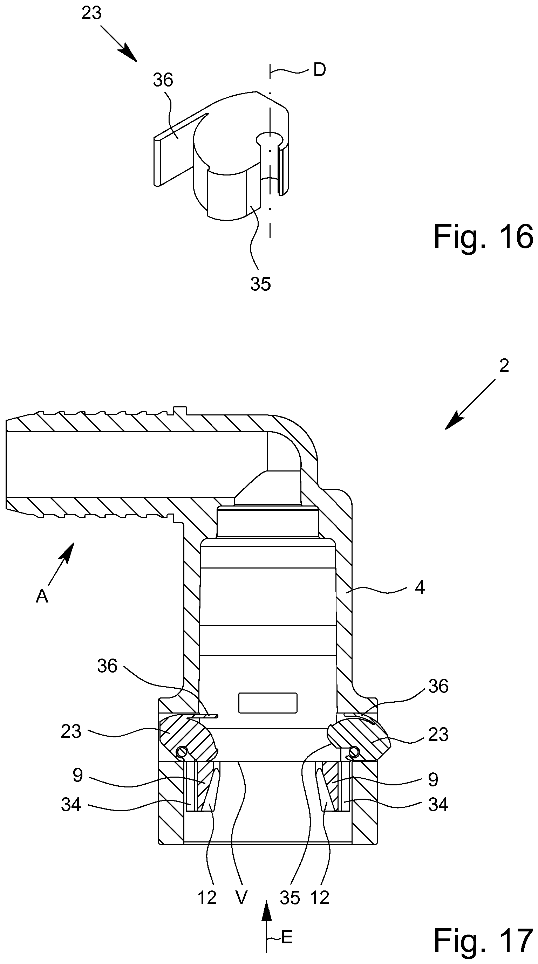

Fig. 16 zeigt ein Signalelement 23 des Sicherungsindikators 19 in einer perspektivischen Ansicht. In Fig. 17 sind zwei in dem Gehäuse 4 der Schnellverbindungsvorrichtung 2 angeordnete Signalelemente 23 dargestellt.

Vorzugsweise sind die Signalelemente 23 entlang der Einschubrichtung E hinter dem Sicherungselement 7a bzw. hinter der Verriegelungsebene V angeordnet. Auf diese Weise ist sichergestellt, dass eine optische Anzeige der Sicherung zuverlässig erst dann erfolgt, wenn die Hinterschneidung 10 des Fluidleitungsendstücks 3 das Sicherungselement 7a bzw. die Verriegelungsebene V passiert hat bzw. wenn das Fluidleitungsendstück 3 gegen Entnahme gesichert ist.

Vorzugsweise sind die Signalelemente 23 symmetrisch bzw. spiegelbildlich zueinander und/oder zu der Einschubrichtung E in dem Gehäuse 4 der Schnellverbindungsvorrichtung 2 angeordnet.

In Fig. 17 sind die Signalelemente 23 in unterschiedlichen Positionen dargestellt. Die auf der linken Seite in Fig.17 dargestellte Position wird im Folgenden als "erste Position" bezeichnet und die auf der rechten Seite in Fig. 17 dargestellte Position wird im Folgenden als "zweite Position" bezeichnet. Die erste Position entspricht der Position, die das Signalelement 23 einnimmt, wenn kein Fluidleitungsendstück 3 in der Schnellverbindungsvorrichtung 2 angeordnet oder eingeschoben ist. Die zweite Position entspricht der Position, die das Signalelement 23 einnimmt, wenn ein Fluidleitungsendstück 3 vollständig in die Schnellverbindungsvorrichtung 2 eingeschoben bzw. in der Schnellverbindungsvorrichtung 2 gesichert ist.

Die Signalelemente 23 sind - zumindest wenn in der Schnellverbindungsvorrichtung 2 kein Fluidleitungsendstück 3 gesichert ist bzw. in der ersten Position - vorzugsweise vollständig innerhalb des oder fluchtend mit einer umgebenden Oberfläche des Gehäuses 4 angeordnet bzw. derart in dem Gehäuse 4 angeordnet, dass sie nicht aus dem Gehäuse 4 herausragen.

Vorzugsweise ist das Signalelement 23 zur Anzeige der Sicherung des Fluidleitungsendstücks 3 zumindest teilweise aus dem Gehäuse 4 herausbewegbar.

Das Signalelement 23 ist vorzugsweise drehbar im Gehäuse 4 gelagert und/oder dazu ausgebildet und/oder derart in dem Gehäuse 4 angeordnet, dass es um eine Drehachse D drehbar ist. Die Drehachse D ist vorzugsweise asymmetrisch zu dem Signalelement 23 angeordnet. Vorzugsweise ist das Signalelement 23 durch eine Drehbewegung bzw. Drehung (um die Drehachse D) von der ersten Position in die zweite Position bewegbar und umgekehrt.

Das Signalelement 23 weist vorzugsweise eine Betätigungsfläche 35 zur Betätigung bzw. Drehung des Signalelements 23 auf. Vorzugsweise ist die Betätigungsfläche derart angeordnet, dass das Fluidleitungsendstück 3, die Hinterschneidung 10 bzw. der Wulst beim Einschieben des Fluidleitungsendstücks 3 in die Schnellverbindungsvorrichtung 2 auf die Betätigungsfläche 35 trifft bzw. gegen diese drückt.

Die Anzeige der Sicherung erfolgt, insbesondere automatisch bzw. selbsttätig und/oder bei oder durch Einschieben des Fluidleitungsendstücks 3, durch eine Drehung des Signalelements 23 um die Drehachse D, so dass sich ein Teil des Signalelements 23 aus dem Gehäuse 4 herausbewegt. Die Drehung des Signalelements 23 wird dadurch bewirkt, dass das Fluidleitungsendstück 3 beim Einschieben gegen die Betätigungsfläche 35 drückt.

Durch die Form des Signalelements 23 und/oder die Anordnung des Signalelements 23 in dem Gehäuse 4 bewirkt die durch das Fluidleitungsendstück 3 beim Einschieben auf das Signalelement 23 bzw. dessen Betätigungsfläche 35 ausgeübte Kraft vorzugsweise eine Drehbewegung bzw. Drehung des Signalelements 23 um die Drehachse D.

Vorzugsweise erfolgt beim Einschieben des Fluidleitungsendstücks 3 eine Drehung des Signalelements 23 um vorzugsweise mehr als 30°, insbesondere zumindest näherungsweise 45°. Eine weitere Drehung des Signalelements 23 (über 45° bzw. die zweite Position hinaus) ist vorzugsweise dadurch blockiert, dass das Signalelement 23 in der zweiten Position bzw. nach einer Drehung um (etwa) 45° ausgehend von der ersten Position mit einer ebenen Fläche an einer zugeordneten Fläche des Gehäuses 4 anliegt, wie auf der rechten Seite in Fig. 17 dargestellt ist.

Wenn das Fluidleitungsendstück 3 in der Schnellverbindungsvorrichtung 2 gesichert ist, wird das Signalelement 23 vorzugsweise durch die Hinterschneidung 10 zweiten Position bzw. in der gedrehten bzw. teilweise aus dem Gehäuse 4 herausbewegten Position gehalten.

Vorzugsweise ist durch die Signalelemente 23 ein Einschieben des Fluidleitungsendstücks 3 über die zum Sichern des Fluidleitungsendstücks 3 benötigte Position hinaus blockiert. Vorzugsweise ist die Hinterschneidung 10 des in der Schnellverbindungsvorrichtung 2 gesicherten Fluidleitungsendstücks 3 zwischen dem Sicherungselement 7a und den Signalelementen 23 angeordnet oder festgeklemmt.

Das Signalelement 23 ist vorzugsweise dazu ausgebildet, eine in dem Gehäuse 4 angeordnete Strebe zu umgreifen oder zu umfassen, so dass das Signalelement 23 um die Strebe drehbar ist und/oder die Strebe die Drehachse D bildet oder aufweist. Vorzugsweise ist das Signalelement 23 zur Montage auf die Strebe aufclipsbar.

Vorzugsweise weist das Signalelement 23 ein Federelement 36 auf. Das Federelement 36 ist insbesondere dazu ausgebildet, das Signalelement 23 in der ersten Position zu halten bzw. - vorzugsweise automatisch bzw. selbsttätig - in die erste Position zu bewegen.

Das Federelement 36 ist vorzugsweise flexibel und/oder elastisch verformbar und/oder als Federarm ausgebildet.

Vorzugsweise ragt das Federelement 36 plattenartig oder stegartig von dem Signalelement 23, insbesondere tangential, ab.

Vorzugsweise wird das Federelement 36 bei der Drehung von der ersten Position in die zweite Position verbogen (wie auch in Fig. 17 angedeutet), so dass es eine Rückstellkraft bewirkt, die eine Drehung bzw. Vorspannung des Signalelements 23 von der zweiten Position in die erste Position bewirkt.

Insbesondere ist das Signalelement 23 mittels des Federelements 36 dazu ausgebildet, sich selbstständig bzw. automatisch in das Gehäuse 4 bzw. die erste Position zurückzubewegen, wenn das Fluidleitungsendstück 3 aus der Schnellverbindungsvorrichtung 2 entnommen wird.

Unterschiedliche Aspekte der vorliegenden Erfindung können unabhängig voneinander und in unterschiedlichen Kombinationen realisiert werden und vorteilhaft sein, auch wenn dies keine explizite Erwähnung findet, solange sie durch den Ansprüchen abgedeckt werden.

**Bezugszeichenliste:**

| | | | |
|---|---|---|---|
| 1 | Schnellverbindungssystem | 30 | Gleitfläche |
| 2 | Schnellverbindungsvorrichtung | 31 | Aufnahme |
| 3 | Fluidleitungsendstück | 32 | Außenseite |
| 4 | Gehäuse | 33 | Aussparung |
| 5 | Durchführung | 34 | Schulter |
| 6 | Halteeinrichtung | 35 | Betätigungsfläche |
| 7a | Sicherungselement | 36 | Federelement |
| 7b | Sicherungselement | | |
| 8 | Betätigungselement | | |
| 9 | Sicherungsabschnitt | | |
| 10 | Hinterschneidung | A | Anschlussabschnitt |
| 11 | Führungsabschnitt | B | Bewegungsrichtung |
| 12 | Auflaufschräge (des Sicherungselements) | D | Drehachse |
| | | E | Einschubrichtung |
| 13 | Betätigungsabschnitt | EP | Entsicherungsposition |
| 14 | Führungselement | L | Längsachse |
| 15 | Rastvertiefung | SP | Sicherungsposition |
| 16 | Rastvorsprung | V | Verriegelungsebene |
| 17 | Betätigungsöffnung | | |
| 18 | Rückstelleinrichtung | α | Winkel |
| 19 | Sicherungsindikator | β | Winkel |
| 20 | Verbindungssteg | | |
| 21 | Funktionselement | | |
| 22 | Auflaufschräge (des Sicherungsindikators) | | |
| 23 | Signalelement | | |
| 24 | Dichteinrichtung | | |
| 25 | Dichtring | | |
| 26 | Distanzhülse | | |
| 27 | Innenseite | | |
| 28 | Öffnungsbereich | | |
| 29 | Ende | | |

## Patentansprüche

1. Schnellverbindungsvorrichtung (2) zur Erzeugung einer ununterbrochenen fluidischen Verbindung mit einer Fluidleitung durch Anschluss an ein offenes, eine Hinterschneidung (10) aufweisendes Fluidleitungsendstück (3) der Fluidleitung,
wobei die Schnellverbindungsvorrichtung (2) an dem Fluidleitungsendstück (3) durch Bewegung entlang einer Einschubrichtung (E) anschließbar ist und
wobei die Schnellverbindungsvorrichtung (2) eine Halteeinrichtung (6) mit einem Sicherungselement (7a) aufweist, wobei die Halteeinrichtung (6) zum Sichern der Schnellverbindungsvorrichtung (2) an dem Fluidleitungsendstück (3) ausgebildet ist,
wobei das Sicherungselement (7a) entlang einer Bewegungsrichtung (B) zwischen einer Sicherungsposition (SP) und einer Entsicherungsposition (EP) in einer quer zu der Einschubrichtung (E) verlaufenden Verriegelungsebene (V) bewegbar ist,
wobei das Sicherungselement (7a) dazu ausgebildet ist, bei Bewegung von der Entsicherungsposition (EP) in die Sicherungsposition (SP) die Hinterschneidung (10) des Fluidleitungsendstücks (3) zu hintergreifen, sodass ein Trennen der ununterbrochenen fluidischen Verbindung oder ein Separieren der Schnellverbindungsvorrichtung (2) und des Fluidleitungsendstücks (3) voneinander blockiert ist,
wobei die Schnellverbindungsvorrichtung (2) einen mittels des Fluidleitungsendstücks (3) bewegbaren Sicherungsindikator (19) zum optischen Signalisieren einer erfolgten Sicherung des Fluidleitungsendstücks (3) gegen Entnahme aufweist, wobei der Sicherungsindikator (19) ein Signalelement (23) zur Anzeige der Sicherung des Fluidleitungsendstücks (3) aufweist,
wobei das Signalelement (23) dazu ausgebildet ist und/oder derart in dem Gehäuse (4) angeordnet ist, dass die Anzeige der Sicherung bei Einschieben des Fluidleitungsendstücks (3) durch eine Drehung des Signalelements (23) erfolgt,
**dadurch gekennzeichnet,**
**dass** das Signalelement (23) ein Federelement (36) aufweist, wobei das Federelement (36) dazu ausgebildet ist, bei Entnahme des Fluidleitungsendstücks (3) aus der Schnellverbindungsvorrichtung (2) eine Bewegung des Signalelements (23) in das Gehäuse (4) zu bewirken.

2. Schnellverbindungsvorrichtung nach Anspruch 1, **dadurch gekennzeichnet, dass** die Schnellverbindungsvorrichtung (2) und/oder das Sicherungselement (7a) dazu ausgebildet sind, dass bei Bewegung des Sicherungselements (7a) von der Sicherungsposition (SP) in die Entsicherungsposition (EP) und/oder bei Einschieben des Fluidleitungsendstücks (3) in die Schnellverbindungsvorrichtung (2) zwei einstückig mit dem Sicherungselement (7a) ausgebildete Sicherungsabschnitte (9) des Sicherungselements (7a), vorzugsweise quer zu der Bewegungsrichtung (B), auseinander bewegt, insbesondere gespreizt, werden; und/oder
dass das Sicherungselement (7a) zwei einander gegenüberliegende, vorzugsweise einstückig mit dem Sicherungselement (7a) ausgebildete, Sicherungsabschnitte (9) aufweist.

3. Schnellverbindungsvorrichtung nach Anspruch 2, **dadurch gekennzeichnet, dass** die Sicherungsabschnitte (9) des Sicherungselements (7a) durch einen, insbesondere quer zu den und/oder zwischen den Sicherungsabschnitten (9) angeordneten, Betätigungsabschnitt (13) des Sicherungselements (7a) miteinander verbunden sind und/oder dass die Sicherungsabschnitte (9) und der Betätigungsabschnitt (13) eine zumindest im Wesentlichen U-artige Form bilden.

4. Schnellverbindungsvorrichtung nach Anspruch 2 oder 3, **dadurch gekennzeichnet, dass** mindestens ein Sicherungsabschnitt (9) oder beide Sicherungsabschnitte (9) des Sicherungselements (7a) eine Auflaufschräge (12) aufweist/aufweisen.

5. Schnellverbindungsvorrichtung nach Anspruch 4, **dadurch gekennzeichnet, dass** die Auflaufschrägen (12) konische Flächen bilden, vorzugsweise wobei die Auflaufschrägen (12) der einander gegenüberliegenden Sicherungsabschnitte (9) Abschnitte einer Mantelfläche eines gedachten, sich in Einschubrichtung (E) verjüngenden Kegels bilden.

6. Schnellverbindungsvorrichtung nach einem der Ansprüche 2 bis 5, **dadurch gekennzeichnet, dass** Innenseiten (27) der Sicherungsabschnitte (9), zumindest in einem ersten Bereich, schräg zu der Bewegungsrichtung (B) verlaufen und/oder aufeinander zulaufen, vorzugsweise sodass zwischen den Sicherungsabschnitten (9) ein sich verengender Öffnungsbereich (28) gebildet ist, und/oder dass sich der Abstand der Innenseiten (27), zumindest in dem ersten Bereich, mit zunehmendem Abstand von dem Betätigungsabschnitt (13) verringert.

7. Schnellverbindungsvorrichtung nach einem der Ansprüche 2 bis 6, **dadurch gekennzeichnet, dass** die Sicherungsabschnitte (9), insbesondere in einem zweiten Bereich und/oder an einem freien Ende (29) der Sicherungsabschnitte (9), Gleitflächen (30) aufweisen, die dazu ausgebildet sind, bei Bewegung der Sicherungselemente (7a) in Richtung der Entsicherungsposition (EP) ein Auseinanderbewegen oder Spreizen der Sicherungsabschnitte (9) zu bewirken.

8. Schnellverbindungsvorrichtung nach Anspruch 6 und 7, **dadurch gekennzeichnet, dass** die Innenflächen (27) des ersten Bereichs und die Gleitflächen (30) des zweiten Bereichs einen stumpfen Winkel einschließen oder bilden.

9. Schnellverbindungsvorrichtung nach Anspruch 7 oder 8, **dadurch gekennzeichnet, dass** die freien Enden (29) der Sicherungsabschnitte (9) jeweils in einer zugeordneten Aufnahme (31) eines Gehäuses (4) der Schnellverbindungsvorrichtung (2) angeordnet sind, vorzugsweise wobei die Gleitflächen (30) jeweils auf einer Gegenfläche der Aufnahme (31) anliegen, insbesondere sodass bei Bewegung des Sicherungselements (7a) in Richtung der Entsicherungsposition (EP) die Sicherungsabschnitte (9) nach außen bewegt oder verbogen werden.

10. Schnellverbindungsvorrichtung nach einem der voranstehenden Ansprüche, **dadurch gekennzeichnet, dass** das Sicherungselement (7a) und/oder die Sicherungsabschnitte (9) an einer Außenseite (32) eine Aussparung (33) aufweisen, insbesondere sodass eine Bewegung der Sicherungsabschnitte (9) nach außen ermöglicht ist.

11. Schnellverbindungsvorrichtung nach einem der voranstehenden Ansprüche, **dadurch gekennzeichnet, dass** das Sicherungselement (7a) eine oder mehrere Rückstelleinrichtungen (18) zur Bewegung des Sicherungselements (7a) in die Sicherungsposition (SP) aufweist.

12. Schnellverbindungsvorrichtung nach einem der Ansprüche 2 bis 11, **dadurch gekennzeichnet, dass** die Sicherungsabschnitte (9) auf einer Außenseite (32) eine Schulter (34) aufweisen oder bilden, vorzugsweise sodass das Sicherungselement (7a) gegen ein Herausfallen oder eine Entnahme aus einem Gehäuse (4) der Schnellverbindungsvorrichtung (2) gesichert ist.

13. Schnellverbindungsvorrichtung nach einem der voranstehenden Ansprüche, **dadurch gekennzeichnet, dass** das Signalelement (23) zur Anzeige der Sicherung zumindest teilweise aus einem Gehäuse (4) der Schnellverbindungsvorrichtung (2) herausbewegbar ist und/oder dass die Drehung des Signalelements (23) um eine asymmetrisch zu dem Signalelement (23) angeordnete Drehachse (D) erfolgt.

14. Schnellverbindungssystem (1) mit einer Schnellverbindungsvorrichtung (2) nach einem der voranstehenden Ansprüche und einem Fluidleitungsendstück (3), das eine Hinterschneidung (10) aufweist, wobei das Sicherungselement (7a, 7b) der Schnellverbindungsvorrichtung (2) zum Hintergreifen der Hinterschneidung (10) in einer gemeinsamen, quer zu einer Einschubrichtung (E) des Fluidleitungsendstücks (3) verlaufenden Verriegelungsebene (V) ausgebildet ist, vorzugsweise wobei die Hinterschneidung (10) an dem Fluidleitungsendstück (3), insbesondere vollständig, umlaufend, als radial vorstehender Wulst und/oder als radiale Nut ausgebildet ist.

## Claims

1. Quick-connection device (2) for creating an uninterrupted fluidic connection with a fluid line by connection to an open fluid line end piece (3) of the fluid line having an undercut (10),
wherein the quick-connection device (2) is connectable to the fluid line end piece (3) by movement along an insertion direction (E) and
wherein the quick-connection device (2) comprises a holding device (6) with a securing element (7a), wherein the holding device (6) for securing the quick-connection device (2) is formed on the fluid line end piece (3),
wherein the securing element (7a) is movable along a direction of movement (B) between a securing position (SP) and an unlocking position (EP) in a locking plane (V) extending transversely to the insertion direction (E),
wherein the securing element (7a) is adapted to engage behind the undercut (10) of the fluid line end piece (3) upon movement from the unlocking position (EP) to the securing position (SP) so that disconnection of the uninterrupted fluid connection or separation of the quick-connection device (2) and the fluid line end piece (3) from each other is blocked,
wherein the quick-connection device (2) has a securing indicator (19) which can be moved by means of the fluid line end piece (3) for optically signalling that the fluid line end piece (3) has been secured against removal, wherein the securing indicator (19) has a signal element (23) for indicating that the fluid line end piece (3) has been secured,
wherein the signal element (23) is designed for this purpose and/or is arranged in the housing (4) in such a way that the indication of securing is effected by a rotation of the signal element (23) when the fluid line end piece (3) is inserted,
**characterized in**
**that** the signal element (23) has a spring element (36), the spring element (36) being designed to cause the signal element (23) to move into the housing (4) when the fluid line end piece (3) is removed from the quick-connection device (2).

2. Quick-connection device according to claim 1, **characterized in that** the quick-connection device (2) and/or the safety element (7a) are configured that, when the securing element (7a) is moved from the securing position (SP) into the release position (EP) and/or when the fluid line end piece (3) is pushed into the quick-connection device (2), two securing sections (9) of the securing element (7a), which are formed integrally with the securing element (7a), are moved apart preferably transversely to the direction of movement (B), in particular spread apart; and/or
**in that** the securing element (7a) has two securing sections (9) arranged opposite to one another, preferably formed integrally with the securing element (7a).

3. Quick-connection device according to claim 2, **characterized in that** the securing sections (9) of the securing element (7a) are connected to one another by an actuating section (13) of the securing element (7a), the actuating section (13) being in particular arranged transversely to and/or between the securing sections (9), and/or in that the securing sections (9) and the actuating section (13) form an at least substantially U-shaped form.

4. Quick-connection device according to claim 2 or 3, **characterized in that** at least one securing section (9) or both securing sections (9) of the securing element (7a) has/have a ramp (12).

5. Quick connection device according to claim 4, **characterized in that** the ramps (12) form conical surfaces, preferably wherein the ramps (12) of the opposite securing sections (9) form sections of a lateral surface of an imaginary cone tapering in insertion direction (E).

6. Quick connection device according to one of claims 2 to 5, **characterized in that** inner sides (27) of the securing sections (9), at least in a first region, run at an angle to the direction of movement (B) and/or converge towards one another, preferably so that a narrowing opening region (28) is formed between the securing sections (9), and/or **in that** the distance between the inner sides (27), at least in the first region, decreases with increasing distance from the actuating section (13).

7. Quick-connection device according to one of claims 2 to 6, **characterized in that** the securing sections (9), in particular in a second region and/or at a free end (29) of the securing sections (9), have sliding surfaces (30) which are designed to cause the securing sections (9) to move apart or spread apart when the securing elements (7a) move in the direction of the release position (EP).

8. Quick-connection device according to claims 6 and 7, **characterized in that** the inner surfaces (27) of the first area and the sliding surfaces (30) of the second area form or form an obtuse angle.

9. Quick-connection device according to claim 7 or 8, **characterized in that** the free ends (29) of the securing sections (9) are each arranged in an associated receptacle (31) of a housing (4) of the quick-connection device (2), preferably with the sliding surfaces (30) each resting on a counter surface of the receptacle (31), in particular so that when the securing element (7a) is moved in the direction of the release position (EP), the securing sections (9) are moved or bent outwards.

10. Quick-connection device according to one of the above requirements, **characterized in that** the securing element (7a) and/or the securing sections (9) have a recess (33) on an outer side (32), in particular so that an outward movement of the securing sections (9) is enabled.

11. Quick-connection device according to one of the above requirements, **characterized in that** the securing element (7a) has one or more restoring devices (18) for moving the securing element (7a) into the securing position (SP).

12. Quick-connection device according to any of claims 2 to 11, **characterized in that** the securing portions (9) have or form a shoulder (34) on an outer side (32), preferably so that the securing element (7a) is secured against falling out or being removed from a housing (4) of the quick-connection device (2).

13. Quick-connection device according to one of the above requirements, **characterized in that** the signal element (23) can be moved at least partially out of a housing (4) of the quick-connection device (2) to indicate the securing and/or that the rotation of the signal element (23) takes place about an axis of rotation (D) arranged asymmetrically to the signal element (23).

14. Quick connection system (1) with a quick connection device (2) according to one of the above claims and a fluid line end piece (3) which has an undercut (10), wherein the securing element (7a, 7b) of the quick connection device (2) is designed to engage behind the undercut (10) in a common locking plane (V) extending transversely to an insertion direction (E) of the fluid line end piece (3), preferably wherein the undercut (10) at the fluid line end piece (3) is formed, in particular completely, circumferentially, as a radially projecting bead and/or as a radial groove.

## Revendications

1. Dispositif de raccordement rapide (2) pour réaliser une liaison fluidique ininterrompue avec une conduite de fluide par raccordement à un embout (3) de la conduite de fluide ouvert au four et présentant une contre-dépouille (10)
dans lequel le dispositif de raccordement rapide (2) peut être raccordé à l'embout (3) de la conduite de fluide par un mouvement le long d'une direction d'insertion (E) et
dans lequel le dispositif de raccordement rapide (2) comprend un dispositif de maintien (6) avec un élément de fixation (7a), dans lequel le dispositif de maintien (6) est formé sur l'embout (3) de la conduite de fluide pour fixer le dispositif de raccordement rapide (2),
dans lequel l'élément de sécurité (7a) est mobile le long d'une direction de mouvement (B) entre une position de sécurité (SP) et une position de déverrouillage (EP) dans un plan de verrouillage (V) s'étendant transversalement à la direction d'insertion (E),
dans lequel l'élément de fixation (7a) est adapté pour s'engager derrière la contre-dépouille (10) de l'embout de conduite de fluide (3) lors du déplacement de la position de déverrouillage (EP) à la position de fixation (SP), de sorte que la déconnexion de la connexion de fluide ininterrompue ou la séparation du dispositif de connexion rapide (2) et de l'embout de conduite de fluide (3) l'un de l'autre est bloquée,
dans lequel le dispositif de raccordement rapide (2) présente un indicateur de sécurité (19), qui peut être déplacé au moyen de l'embout (3) de la conduite de fluide, pour signaler visuellement que l'embout (3) de la conduite de fluide est bloqué contre tout enlèvement, dans lequel l'indicateur de sécurité (19) présente un élément de signalisation (23) pour indiquer que l'embout (3) de la conduite de fluide est bloqué,
l'élément de signalisation (23) étant conçu à cet effet et/ou étant disposé dans le boîtier (4) de telle sorte que l'indication du fusible s'effectue par une rotation de l'élément de signalisation (23) lorsque l'embout de la conduite de fluide (3) est inséré,
**caractérisée**
**en ce que** l'élément de signalisation (23) comporte un élément à ressort (36), l'élément à ressort (36) étant conçu pour provoquer le déplacement de l'élément de signalisation (23) dans le boîtier (4) lorsque l'embout de la conduite de fluide (3) est retiré du dispositif de raccordement rapide (2).

2. Dispositif de raccordement rapide selon la revendication 1, **caractérisé en ce que** le dispositif de raccordement rapide (2) et/ou l'élément de fixation (7a) sont conçus à cet effet, **en ce que**, lors du déplacement de l'élément de fixation (7a) de la position de fixation (SP) dans la position de libération (EP) et/ou lors de l'introduction de l'embout de conduite de fluide (3) dans le dispositif de raccordement rapide (2), deux sections de fixation (9) de l'élément de fixation (7a), qui sont réalisées d'un seul tenant avec l'élément de fixation (7a), de préférence transversalement à la direction de déplacement (B), sont écartées, en particulier écartées ; et/ou
**en ce que** l'élément de fixation (7a) présente deux sections de fixation (9) opposées l'une à l'autre, qui sont de préférence formées d'une seule pièce avec l'élément de fixation (7a).

3. Dispositif de connexion rapide selon la revendication 2, **caractérisé en ce que** les parties de fixation (9) de l'élément de fixation (7a) sont reliées entre elles par une partie d'actionnement (13) de l'élément de fixation (7a), en particulier disposée transversalement à et/ou entre les parties de fixation (9), et/ou **en ce que** les parties de fixation (9) et la partie d'actionnement (13) forment une forme au moins sensiblement en U.

4. Dispositif de raccordement rapide selon la revendication 2 ou 3, **caractérisé en ce qu'**au moins une partie de fixation (9) ou les deux parties de fixation (9) de l'élément de fixation (7a) présente(nt) une pente d'accès (12).

5. Dispositif de connexion rapide selon la revendication 4, **caractérisé en ce que** les rampes (12) forment des surfaces coniques, de préférence dans lequel les rampes (12) des parties de fixation opposées (9) forment des parties d'une surface latérale d'un cône imaginaire se rétrécissant dans la direction d'insertion (E).

6. Dispositif de connexion rapide selon l'une des revendications 2 à 5, **caractérisé en ce que** les côtés intérieurs (27) des sections de fixation (9), au moins dans une première zone, s'étendent sous un angle par rapport à la direction de mouvement (B) et/ou convergent l'un vers l'autre, de préférence de telle sorte qu'une zone d'ouverture (28) se rétrécit entre les sections de fixation (9), et/ou **en ce que** la distance entre les côtés intérieurs (27), au moins dans la première zone, diminue lorsque la distance par rapport à la section d'actionnement (13) augmente.

7. Dispositif de connexion rapide selon l'une des revendications 2 à 6, **caractérisé en ce que** les sections de fixation (9), en particulier dans une deuxième zone et/ou à une extrémité libre (29) des sections de fixation (9), présentent des surfaces de glissement (30) qui sont conçues pour provoquer un écartement ou un écartement des sections de fixation (9) lorsque les éléments de fixation (7a) sont déplacés en direction de la position de libération (EP).

8. Dispositif de connexion rapide selon les revendications 6 et 7, **caractérisé en ce que** les surfaces intérieures (27) de la première zone et les surfaces de glissement (30) de la deuxième zone forment ou forment un angle obtus.

9. Dispositif de raccordement rapide selon la revendication 7 ou 8, **caractérisé en ce que** les extrémités libres (29) des sections de fixation (9) sont disposées chacune dans un logement associé (31) d'un boîtier (4) du dispositif de raccordement rapide (2), de préférence avec les surfaces de glissement (30) reposant chacune sur une contre-surface du logement (31), en particulier de sorte que lorsque l'élément de fixation (7a) est déplacé en direction de la position de libération (EP), les sections de fixation (9) sont déplacées ou pliées vers l'extérieur.

10. Dispositif de connexion rapide selon l'une des exigences ci-dessus, **caractérisé en ce que** l'élément de fixation (7a) et/ou les parties de fixation (9) présentent un évidement (33) sur un côté extérieur (32), en particulier de sorte que le mouvement des parties de fixation (9) vers l'extérieur est possible.

11. Dispositif de connexion rapide selon l'une des revendications ci-dessus, **caractérisé en ce que** l'élément de fixation (7a) comporte un ou plusieurs dispositifs de rappel (18) pour déplacer l'élément de fixation (7a) dans la position de fixation (SP).

12. Dispositif de raccordement rapide selon l'une des revendications 2 à 11, **caractérisé en ce que** les parties de fixation (9) présentent ou forment un épaulement (34) sur un côté extérieur (32), de préférence de sorte que l'élément de fixation (7a) est protégé contre la chute ou l'enlèvement d'un boîtier (4) du dispositif de raccordement rapide (2).

13. Dispositif de connexion rapide selon l'une des exigences ci-dessus, **caractérisé en ce que** l'élément de signalisation (23) peut être déplacé au moins partiellement hors d'un bo tier (4) du dispositif de connexion rapide (2) pour indiquer la fixation et/ou que l'élément de signalisation (23) est tourné autour d'un axe de rotation (D) disposé de manière asymétrique par rapport à l'élément de signalisation (23).

14. Système de raccordement rapide (1) avec un dispositif de raccordement rapide (2) selon l'une des exigences ci-dessus et un embout de conduite de fluide (3) qui présente une contre-dépouille (10), dans lequel l'élément de fixation (7a, 7b) du dispositif de raccordement rapide (2) est conçu pour s'engager derrière la contre-dépouille (10) dans un élément de fixation commun (7a, 7b) du dispositif de raccordement rapide (2), plan de verrouillage (V) s'étendant transversalement à une direction d'insertion (E) de l'embout de conduite de fluide (3), de préférence dans lequel la contre-dépouille (10) sur l'embout de conduite de fluide (3) est formée, en particulier complètement, circonférentiellement, comme un bourrelet faisant saillie radialement et/ou comme une rainure radiale.
